Europäisches Patentamt

European Patent Office

Office européen des brevets

(19)

(11) Numéro de publication: **0 282 361**
**B1**

(12) **FASCICULE DE BREVET EUROPEEN**

(45) Date de publication du fascicule du brevet:
24.10.90

(51) Int. Cl.⁵: **B64G 1/58**

(21) Numéro de dépôt: 88400039.9

(22) Date de dépôt: 08.01.88

(54) Dispositif de protection thermique réutilisable pour engins qui peut se substituer à leur habituelle paroi extérieure.

(30) Priorité: 27.02.87 FR 8702629

(43) Date de publication de la demande:
14.09.88 Bulletin 88/37

(45) Mention de la délivrance du brevet:
24.10.90 Bulletin 90/43

(84) Etats contractants désignés:
**DE GB IT**

(56) Documents cités:
**FR-A- 877 234**
**FR-A- 2 586 080**
**US-A- 3 368 318**
**US-A- 4 151 800**

(73) Titulaire: **Deflassieux, Pierre, La Cavinière Fontareches par, F-30580 Lussan(FR)**

(72) Inventeur: **Deflassieux, Pierre, La Cavinière Fontareches par, F-30580 Lussan(FR)**

ACTORUM AG

## Description

La présente invention est relative au domaine des protections thermiques et plus précisément à un dispositif de protection thermique réutilisable et facile à réparer qui peut être employé sur des engins soumis à des échauffements importants tels que des engins aéronautiques ou spatiaux sans les alourdir parce qu'il permet l'allègement de leur structure et peut également se substituer à leur habituelle paroi extérieure de fuselage.

Un avion ou engin volant à grande vitesse subit un échauffement important à cause du freinage de l'atmosphère. Ce phénomène est plus accentué pour un engin spatial assurant la desserte aller-retour d'une orbite quelconque ou pour un véhicule suborbital dont la température de surface peut atteindre localement 1000°C ou 2000°C ou même davantage.

Pour éviter un échauffement excessif des parties vitales de l'engin, il est habituel de le recouvrir d'une protection thermique qui subit les flux cinétiques. Ces flux dépendent principalement de la trajectoire et varient d'une zone à une autre de l'engin. En l'absence de protection celui-ci serait endommagé ou détruit. En effet, un fuselage en aluminium, par exemple, ne doit pas être porté à une température excédant 170°C.

De plus, un engin est soumis à différentes charges aérodynamiques et à d'autres charges de diverses natures dues à l'environnement au sens le plus large. On comprend que la protection thermique, nécessaire par hypothèse, doit résister à l'ensemble de ces charges.

On retrouve les mêmes difficultés lorsqu'un objet, ou une installation quelconque subit un échauffement important.

L'état de l'art actuel consiste à recouvrir la face extérieure du fuselage de l'engin d'une protection en matériaux réfractaires collée ou fixée par des moyens mécaniques.

Cette protection est le plus souvent constituée d'un grand nombre d'éléments presque tous différents réalisés chacun en tenant compte, d'une part, de la courbure de la paroi du fuselage, des découpes pour antennes, portes et autres particularités et, d'autre part, du flux localement subi auquel est adaptée l'efficacité des éléments. Le coût d'ensemble de la protection est de ce fait très élevé en production et en maintenance. C'est la recherche d'une optimisation technique qui conduit à cette situation, en particulier la recherche de l'allègement maximum. Le dispositif de protection de l'Orbiter du Space Shuttle développé aux Etats-Unis d'Amérique est caractéristique de cette situation. Il est composé, dans les zones à moyenne et haute température de très nombreux éléments pleins, presque tous différents, réalisés en fibres de silice, collés sur la paroi du fuselage de l'Orbiter. Son utilisation a présenté certaines difficultés.

Une autre méthode de protection contre les hautes températures consiste à recouvrir la surface de l'engin d'éléments réutilisables résistants ayant cependant une souplesse suffisante pour s'adapter à la courbure locale du fuselage de l'engin de façon que leur production et leur maintenance puissent être standardisées. Leur efficacité d'isolation est assortie au flux localement subi afin de préserver l'optimisation technique. L'application de cette méthode est facilitée par la présente invention.

Une autre manière connue consiste à recouvrir le fuselage d'une protection souple réalisée par juxtaposition de panneaux réutilisables de grande superficie. Le brevet US numéro 4 151 800 de mai 1979 intitulé "THERMAL INSULATION PROTECTION MEANS" décrit totalement une telle protection et mentionne la possibilité de l'employer dans des zones d'un véhicule spatial dont la température n'excède pas 756°K, ce qui équivaut à 483°C environ. Une telle protection ne peut donc équiper que des zones peu exposées de l'engin.

Une autre méthode consiste à recouvrir l'engin d'une protection dite ablative dont les caractéristiques sont modifiées après vol, ce qui limite les possibilités de réutilisation. La présente invention est compatible avec cette méthode et permet l'allègement de l'engin.

En résumé, la méthode connue consiste toujours à protéger l'engin par une couche extérieure de protection fixée sur la paroi délimitant le contour du fuselage avec laquelle elle constitue un ensemble indissociable dont on recherche l'optimisation.

Cette association ne permet pas en fait une réelle optimisation de l'engin considéré globalement parce qu'elle correspond à une inutile contrainte de conception de sa structure travaillante. En effet, la présence d'une paroi travaillante sous la protection thermique et à sa proximité immédiate, épousant fidèlement le contour de l'engin pour lui donner sa forme, n'est pas nécessaire puisque la forme de l'engin vis-à-vis de l'air lui est donnée par la protection thermique extérieure présente par hypothèse, et non par la structure qui est située sous la protection thermique.

Les expressions "structure" et "structure travaillante" utilisées indifféremment ci-avant et dans ce qui suit signifient qu'il s'agit de l'ensemble des éléments mécaniques participant à la résistance de l'engin considéré globalement aux efforts généraux. Il peut s'agir de cadres, longerons, ferrures, bâtis de poussée, enceintes, habitacles, réservoirs, et de tous autres éléments forts participant à la résistance d'ensemble de l'engin. Dans le cas habituel d'une structure coque, la paroi de fuselage fait partie de la structure travaillante. Lorsqu'il s'agit de portes, trappes, carénages et autres particularités de la structure, cette expression sert ici à désigner leurs principaux éléments de rigidité.

L'expression "paroi de fuselage" utilisée ci-avant et dans ce qui suit sert à désigner la paroi qui délimite habituellement le contour d'un engin et recouvre son corps, sa voilure et tous carénages et appendices.

D'autre part, l'association étroite de la protection extérieure et de la paroi de fuselage habituelle n'est pas justifiée non plus par la nécessité, dans tous les cas, de transférer de manière répartie à la structure travaillante les efforts de pression extérieure et autres efforts qui s'exercent localement sur la protection. En effet, ces efforts ne sont pas d'une importance telle qu'il faille obligatoirement les répartir au moyen d'une paroi travaillante intercalée entre la protection thermique et le reste de la structure travaillante.

Leur niveau est cependant suffisant pour imposer que la protection elle-même ait une bonne résistance mécanique. Elle ne peut donc être très légère, d'où une masse élevée de l'association ci-dessus qui comprend deux constituants dans lesquels cheminent séparément des efforts parfois de même origine sans pour autant que ces deux constituants puissent être fortement reliés pour constituer un sandwich résistant car il faut éviter la conduction thermique vers la paroi de fuselage.

De plus, l'association étroite de la protection thermique et de la paroi habituelle du fuselage aboutit au résultat paradoxal que les performances de la protection sont imposées par le but accessoire de préserver l'intégrité de cette paroi inutilement proche de la protection, ou tout simplement inutile, et non par le but fondamental qui est de préserver l'engin, ses occupants éventuels et ses équipements. En effet, la température extrême que cette paroi peut subir sans dommage détermine directement l'efficacité requise de la protection. Or le matériau constitutif de cette paroi travaillante est choisi en tenant compte de ses qualités de résistance mécanique principalement qui ne concordent pas toujours avec une bonne capacité à soutenir de hautes températures. La protection thermique requise pour préserver l'intégrité de cette paroi est alors surabondante et bien trop lourde dans le cas habituel d'une paroi travaillante continue car la protection est continûment surabondante.

La présente invention a pour objet d'éliminer ces inconvénients en proposant un dispositif de protection thermique ne nécessitant pas l'existence d'une paroi de fuselage à sa proximité immédiate lui servant de support, ce qui donne une grande flexibilité pour concevoir le dispositif de protection lui-même ainsi que la structure travaillante de l'engin qui peuvent être réellement optimisés par rapport aux contraintes et conditions effectives d'utilisation de cet engin, et non par rapport à des contraintes de conception locale non justifiées.

La présente invention est fondée sur la séparation des rôles du dispositif de protection thermique d'une part, et de la structure travaillante d'autre part, comme suit :

- le dispositif de protection thermique délimite le contour de l'engin, fait écran vis-à-vis de l'écoulement extérieur et de l'environnement en général, transfère à la structure travaillante les efforts qu'il subit localement et préserve les volumes sous-jacents ainsi que leurs équipements d'un échauffement excessif et des effets de l'environnement.

- la structure travaillante reprend les efforts que lui transmet le dispositif de protection et résiste à tous les efforts généraux résultant de l'utilisation de l'engin tels que la poussée des moteurs, les charges d'inertie et d'autres charges de diverses natures.

Puisque la structure travaillante n'a alors pas de rôle vis-à-vis de l'écoulement extérieur, elle ne comporte pas obligatoirement sous le dispositif de protection thermique objet de la présente invention l'habituelle paroi continue de fuselage.

On comprend également qu'une paroi travaillante continue ou discontinue peut toutefois exister sous le dispositif de protection thermique objet de la présente invention sans pour autant épouser fidèlement le contour extérieur de l'engin.

Il est évident que rien n'interdit de disposer sous ce dispositif de protection thermique une paroi continue ou discontinue de fuselage épousant fidèlement le contour de l'engin mais qu'il s'agit alors d'un choix délibéré et non d'une disposition imposée par la conception de la protection thermique.

Bien entendu, l'étanchéité des volumes sous-jacents à la protection peut être garantie, lorsqu'elle est requise, par ce dispositif de protection thermique au niveau le plus approprié pour l'engin considéré ou la partie d'engin considérée.

En conséquence, le but de la présente invention est de fournir un dispositif de protection thermique réutilisable amélioré pour engins, objets et installations soumis à des échauffements importants et à des charges d'environnement diverses qui possède les propriétés thermiques requises sans augmenter leur masse, ce qui est un avantage considérable.

Un autre objectif de cette invention est de fournir un dispositif de protection thermique qui permette d'alléger la structure travaillante de l'engin car il ne nécessite pas l'existence d'une paroi lui servant de support, ce qui donne une grande flexibilité pour concevoir la structure travaillante pouvant aller jusqu'à la suppression de l'habituelle paroi extérieure de fuselage.

Un autre objet de cette invention est de fournir un dispositif de protection thermique amélioré qui réduise de façon importante l'augmentation de température de la structure, des volumes sous-jacents et de leurs équipements, sans que l'efficacité de la protection soit imposée par la capacité de résistance de son support aux hautes températures.

Un autre but de cette invention est de fournir un dispositif de protection thermique réutilisable constitué d'une pluralité de panneaux légers contigus résistant aux charges locales de toutes natures qui joue le rôle d'écran par rapport au milieu extérieur, d'une couche isolante légère sous-jacente efficiente vis-à-vis des flux thermiques, de moyens d'étanchéité améliorés et de moyens de fixation de ce dispositif améliorés transférant directement à la structure travaillante les efforts subis localement par les panneaux contigus extérieurs.

Un autre but de cette invention est de fournir un dispositif de protection thermique facilement réparable et remplaçable au sol, et même au cours d'un vol orbital au moyen de panneaux de réparation temporaire.

Un autre objectif de cette invention est de fournir un dispositif de protection thermique dont la constitution, les caractéristiques ainsi que les performances thermiques et autres sont facilement adaptables à celles localement requises pour en permettre l'optimisation globale et celle de l'engin.

Un autre but de la présente invention est de fournir un dispositif de protection thermique fiable et même redondant lorsqu'on utilise la possibilité de placer à demeure une feuille complémentaire en matériau réfractaire sous-jacente aux panneaux contigus extérieurs.

Un autre objet de cette invention est de fournir un dispositif de protection thermique réalisable à faible coût et de fiabilité améliorée par la standardisation des constituants et des procédés afin d'aboutir à des coûts réduits de conception, mise au point, fabrication, contrôle, installation, réparation et remplacement.

Un autre but est de fournir un dispositif de protection thermique capable de résister aux efforts locaux de pression, aux charges thermiques et aussi aux agressions d'un environnement exceptionnellement défavorable, comme par exemple les vibrations d'origine mécanique, la pression acoustique due à la proximité de moteurs, les chocs de météorites, d'oiseaux, de grêlons et d'objets divers, le foudroiement, et d'autres charges.

Un autre but de cette invention est de fournir un dispositif de protection thermique facilitant l'aménagement de l'engin et son optimisation car il ne nécessite pas l'existence d'une paroi continue lui servant de support, ce qui donne une grande flexibilité pour situer au mieux et alléger certains constituants de l'engin tels que, par exemple, ceux destinés à réduire les effets d'un environnement agressif sur les parties internes de l'engin.

Le dispositif de protection thermique selon l'invention comporte, de manière connue, une pluralité de panneaux contigus en matériau réfractaire faisant écran par rapport au milieu extérieur, des moyens de fixation de ces panneaux directement sur la structure travaillante de l'engin, des moyens de liaison entre panneaux contigus, une couche de produits isolants résistant aux hautes températures interposée entre les panneaux contigus et l'engin, ainsi que des moyens de fixation de cette couche isolante sur l'engin. Il comporte aussi des moyens réalisant son étanchéité lorsque celle-ci doit être garantie par le dispositif de protection thermique lui-même. L'emplacement de ces moyens, leur constitution et leurs caractéristiques dépendent du niveau où l'étanchéité est requise et du degré d'étanchéité exigé. Ces moyens sont des jonctions étanches ou une feuille d'étanchéité ou une combinaison de ces éléments et font partie du dispositif, quel que soit leur emplacement, lorsque l'étanchéité du dispositif lui-même est requise. Les traversées étanches de la feuille d'étanchéité et tout autre élément contribuant à l'étanchéité du dispositif de protection thermique selon l'invention en font également partie.

Le dispositif selon l'invention comporte aussi des moyens servant à sa réparation temporaire, si celle-ci s'avère nécessaire. Il s'agit de panneaux de réparation temporaire et de leurs moyens de fixation sur l'engin utilisables par exemple au cours d'un vol orbital de cet engin pour pallier la détérioration de panneaux contigus extérieurs ou de leurs jonctions à la suite d'un choc, tel que l'impact d'un météorite ou d'un débris orbital, en constituant un écran mince qui préserve l'engin au cours de la rentrée atmosphérique.

Le dispositif selon l'invention peut être adapté à son usage précis en jouant sur son dimensionnement et sur sa constitution. Certains constituants peuvent être supprimés si cela présente un avantage, comme par exemple la couche isolante si les flux thermiques sont modérés, ou certains moyens de fixation comme précisé dans la description qui suit, ou les moyens d'étanchéité éventuellement.

Certains constituants du dispositif objet de l'invention peuvent remplir des fonctions n'ayant pas de lien direct avec leur rôle fondamental de protection thermique, comme par exemple contribuer à réduire les effets d'un environnement agressif.

Le dispositif de protection thermique selon l'invention est fixé sur la structure travaillante de l'engin qui peut être dépourvue de l'habituelle paroi extérieure de fuselage. Il peut être fixé par exemple sur des cadres, sur des longerons ou un ensemble de cadres et longerons. Ces éléments travaillants de la structure ne font pas partie du dispositif de protection thermique proprement dit. Ils doivent seulement être situés de manière à le recevoir et conçus pour résister aux efforts que ce dispositif de protection leur transmet et aux efforts généraux.

Dans un premier mode de réalisation du dispositif objet de la présente invention, ses constituants peuvent être produits séparément puis installés successivement sur l'engin.

Dans un autre mode de réalisation certains constituants de ce dispositif peuvent être conditionnés ensemble préalablement à leur installation sur l'engin puis fournis ensemble pour cette installation. Les panneaux qui font écran par rapport au milieu extérieur et la couche isolante peuvent par exemple être conditionnés ensemble sous forme d'éléments préfabriqués comportant chacun un panneau extérieur et contenant une partie de la couche isolante. Ces éléments sont fixés directement sur la structure travaillante de l'engin par des moyens qui peuvent être ou non communs avec les moyens de fixation des panneaux sur l'engin.

Selon une autre caractéristique de l'invention, les panneaux contigus sont rigides. Ils peuvent aussi, quel que soit le mode de réalisation du dispositif, posséder une souplesse suffisante pour que leur configuration ou leurs bords respectifs puissent être facilement ajustés sur place par déformation élastique, ou qu'ils puissent acquérir la forme locale du contour de l'engin à l'emplacement qu'ils protègent. Ce contour est en effet généralement courbé et évolutif et il peut donc être avantageux de l'obtenir par juxtaposition de panneaux déformables produits de manière standardisée, plutôt qu'à partir de panneaux rigides, généralement différents les uns des autres, dont la production et la maintenance sont inévitablement onéreuses.

Selon une autre caractéristique de l'invention, les panneaux contigus ou les éléments préfabriqués peuvent être distincts les uns des autres ou bien reliés entre eux avant installation sur l'engin de façon à constituer des groupes, rangées ou associations de plusieurs panneaux installés d'un seul tenant sur l'engin.

Selon une autre caractéristique du dispositif, les panneaux contigus comprennent chacun au moins une feuille mince, plane ou courbe, en un matériau réfractaire qui peut être un métal par exemple le tantale, le titane ou le niobium, ou encore un alliage comprenant par exemple du nickel, du zircone, ou du chrome. Le matériau constitutif de la feuille mince peut aussi être un matériau composite à base de fibres de silice, de carbone, ou d'oxydes de métal, ou un autre matériau réfractaire.

Les panneaux contigus selon un aspect de l'invention comportent lorsque nécessaire des moyens de rigidification pour accroître leur résistance mécanique. Ces moyens peuvent être par exemple des éléments de bordure des panneaux ou d'autres éléments disposés sous une feuille mince ou une combinaison de ces éléments. Dans un mode de réalisation préféré, les moyens de fixation de ces panneaux contribuent à leur résistance mécanique.

Lorsqu'il est nécessaire de compenser la dilatation d'origine thermique des panneaux, ceux-ci peuvent être équipés de moyens de compensation. Les moyens de fixation des panneaux sur la structure peuvent également effectuer cette compensation ou y contribuer ainsi que les moyens éventuels de liaison entre ces panneaux.

La feuille mince selon l'invention a en général la forme d'un parallélogramme mais elle peut se présenter sous une autre forme. Le nom "parallélogramme" employé ici désigne sa forme générale qui peut être adaptée en tant que de besoin pour tenir compte de spécifications techniques diverses parmi lesquelles l'obtention d'une surface extérieure courbe, ou l'obtention d'une surface réputée lisse par rapport à l'écoulement extérieur, ou encore pour tenir compte de particularités de l'engin.

Selon une autre caractéristique de l'invention, les panneaux sont fixés sur la structure travaillante sans nécessiter pour cela la présence d'une paroi intermédiaire de structure continue ou discontinue. Dans un mode de réalisation chaque panneau possède ses propres moyens de fixation qui peuvent faire partie du panneau par construction, ou lui être rajoutés après construction. Ces moyens peuvent consister en un ensemble de supports, vis, attaches, pattes et autres éléments d'assemblage fixés sur la structure travaillante de l'engin, par exemple sur des cadres ou longerons. Ils peuvent également se présenter sous forme d'un support continu tel qu'un profilé. L'assemblage sur l'engin peut aussi être effectué sans éléments mécaniques particuliers par collage, soudage ou autre procédé.

Dans un autre mode de réalisation ces moyens de fixation des panneaux sur l'engin sont communs à plusieurs panneaux au lieu d'appartenir spécifiquement à chacun. Ils peuvent constituer alors un ensemble fixé sur la structure travaillante, par exemple un treillis, qui reçoit les panneaux.

Les moyens de fixation des panneaux ou des éléments préfabriqués sur la structure travaillante de l'engin jouent l'un au moins des rôles complémentaires suivants :
- participer à la résistance mécanique du panneau
- tolérer les dilatations du panneau et les déplacements relatifs des panneaux entre eux et par raport à la structure de l'engin

- participer, dans le cas d'un panneau suffisamment souple, à la création et/ou au maintien de sa courbure
- contribuer à fixer la couche isolante
- fixer certains moyens d'étanchéité
- fixer un panneau de réparation temporaire
- fixer des équipements de l'engin n'ayant pas de lien direct avec la protection thermique, par exemple des produits destinés à atténuer les niveaux acoustiques
- contribuer, le cas échéant, à la résistance mécanique de la structure travaillante dont ils ne font pas partie.

Pour jouer ces rôles complémentaires, les moyens de fixation des panneaux ou des éléments préfabriqués sur l'engin peuvent comporter divers accessoires tels que des joints, des cales isolantes, des articulations, des pièces de réglage pour placer les panneaux avec précision et d'autres accessoires.

Selon une autre caractéristique de l'invention, les moyens de liaison éventuels entre panneaux contigus ou éléments préfabriqués réalisent l'ajustement correct de leurs bords, peuvent augmenter leur résistance mécanique, tolérer ou compenser leurs dilatations et déplacements, contribuer à l'étanchéité du dispositif et, dans le cas de panneaux suffisamment souples, peuvent participer à la création et/ou au maintien de leur courbure.

Selon une autre caractéristique de l'invention la couche isolante est située entre les panneaux contigus extérieurs et la structure de l'engin. Elle est réalisée par juxtaposition d'éléments contigus composés chacun de produits isolants capables de résister aux hautes températures. Le choix de ces produits, de leur disposition, de leur épaisseur et de leurs caractéristiques dépend des températures et autres charges d'environnement qu'ils subissent et de l'efficacité d'isolation recherchée qui varie généralement d'une zone à l'autre de l'engin. De ce fait la couche isolante est généralement constituée de plusieurs épaisseurs de produits différents.

Chaque élément isolant peut être associé à un panneau par exemple en étant placé dans un conteneur situé sous ce panneau, ou bien être réalisé, fourni ou monté indépendamment des panneaux ce qui permet de réaliser des éléments de plus grande superficie.

Les éléments isolants possèdent des moyens de fixation sur l'engin. Dans un mode de réalisation préféré, ces moyens sont supprimés parce que leur rôle est en fait tenu directement ou indirectement par les moyens de fixation des panneaux extérieurs sur la structure travaillante, ou parce que la couche isolante est enfermée dans un conteneur lié au panneau, ou associée aux moyens d'étanchéité ce qui dispense de fixations particulières.

Selon une autre caractéristique du dispositif objet de l'invention, celui-ci comporte lorsque nécessaire des moyens pour garantir l'étanchéité des volumes sous-jacents qui est généralement requise pour éviter la pénétration dans l'engin de gaz chauds, ou d'eau ou d'humidité qui pourraient détériorer l'engin. L'étanchéité n'est en général pas exigée de façon complète au niveau des panneaux extérieurs du dispositif. Elle peut en fait être améliorée ou réalisée à un niveau sous-jacent soit par le dispositif de protection thermique lui-même, soit par des éléments qui n'en font pas partie.

Lorsque le dispositif objet de l'invention doit être étanche, il comporte des jonctions étanches entre panneaux extérieurs contigus, eux-mêmes réputés étanches. Ces jonctions peuvent aussi servir à obtenir ou maintenir une position relative correcte des bords respectifs de panneaux contigus en s'accomodant des tolérances de leur position au montage et de leurs modifications mineures de forme sous l'effet des charges locales thermiques, mécaniques et autres. Leurs constituants peuvent faire partie de chaque panneau par construction ou lui être rajoutés après construction. Ils peuvent aussi, dans un mode préféré de réalisation, être produits isolément puis placés entre les panneaux lors du montage sur l'engin, ce qui permet de réaliser des jonctions de grande longueur et de réduire ainsi le nombre de leurs discontinuités.

Les panneaux comportent aussi des joints d'étanchéité au niveau de leurs fixations lorsque celles-ci les traversent.

Les jonctions sont réalisées de façon à surmonter différentes difficultés telles que les hautes températures subies, l'érosion par l'écoulement extérieur, la nécessité de tolérer les dilatations des panneaux et d'obtenir une surface lisse à l'extérieur de l'engin.

Le dispositif peut également comporter une feuille réalisant ou améliorant son étanchéité, ou utilisée en tant que redondance des jonctions étanches.

Cette feuille d'étanchéité peut être située dans l'engin à l'emplacement le plus approprié qui peut être par exemple proche des parties de l'engin qu'il faut protéger des gaz chauds. Par conséquent elle n'est pas obligatoirement située à proximité immédiate des panneaux contigus extérieurs du dispositif. Sa constitution et ses caractéristiques dépendent du degré d'étanchéité requis. Il s'agit d'une feuille mince non travaillante dont les caractéristiques résultent des exigences d'étanchéité et non de la nécessité de transférer des charges mécaniques. Son utilisation peut rendre acceptable l'emploi de panneaux ou de jonctions peu étanches. Elle est réalisée de préférence en un métal réfractaire.

Selon l'invention cette feuille peut éventuellement servir à d'autres fonctions que l'obtention de l'étanchéité, se cumulant ou non avec celle-ci. Dans cette éventualité, sa situation, sa constitution et ses caractéristiques sont adaptées aux exigences résultant des fonctions remplies. Elle peut par exemple servir de protection thermique de secours à demeure ou contribuer directement ou indirectement à l'atténuation des niveaux acoustiques, ou contribuer à préserver l'engin des conséquences d'un foudroiement ou d'un bombardement d'électrons en assurant la continuité électrique, ou remplir d'autres fonctions telles que l'égalisation des températures pour éviter une surchauffe locale.

Selon une autre caractéristique du dispositif objet de l'invention, celui-ci comporte lorsque nécessaire des panneaux de réparation temporaire utilisés seulement en cas de détérioration de certains panneaux contigus extérieurs pour jouer à leur place un rôle équivalent. Chaque panneau de réparation temporaire comporte au moins une feuille mince résistante et des moyens de fixation de celle-ci sur l'engin, de préférence sur la face extérieure des panneaux contigus détériorés.

Dans un mode de réalisation préféré les panneaux de réparation temporaire sont suffisamment souples dans au moins une direction pour épouser localement la forme extérieure de l'engin de manière qu'un nombre restreint d'entre eux suffise à la réparation dans toute zone vulnérable de l'engin sans limitations dues à la géométrie locale. Ils peuvent cependant être rigides. Dans le même but la forme générale de ces panneaux est quelconque : elle peut être identique à celle des panneaux contigus à recouvrir comme elle peut, selon la réparation à effectuer, en être différente. Les dimensions d'un panneau de réparation temporaire sont quelconques. En particulier un panneau de réparation temporaire peut recouvrir, en totalité ou en partie, plusieurs panneaux contigus si cela présente un avantage, par exemple celui de pallier la détérioration des joints entre ces panneaux contigus.

La feuille mince comme les autres constituants des panneaux de réparation temporaire est réalisée en matériaux réfractaires qui peuvent être des métaux ou alliages réfractaires de métaux, ou des matériaux composites à base de fibres. Son épaisseur est de quelques dizièmes de millimètres. Elle peut être équipée de renforts en particulier à sa périphérie.

La fixation des panneaux de réparation temporaire peut être réalisée par collage ou autre procédé analogue, ou bien par des moyens mécaniques, ou encore par une combinaison de ces moyens et procédés. Dans le cas de moyens mécaniques ceux ci peuvent consister en accessoires ajoutés pour partie aux panneaux contigus détériorés eux-mêmes ou à leurs moyens de fixation sur l'engin ou à leurs moyens de liaison. Ces ajouts sont effectués sur l'engin au cours de la réparation. Ils peuvent également être effectués par avance dans toute zone de l'engin susceptible d'être réparée. Le panneau de réparation temporaire est équipé lui-même d'une partie des moyens de fixation sur l'engin. Dans un mode de réalisation préféré les pièces, produits, moyens et accessoires nécessaires à la réparation sont prisonniers du panneau de réparation temporaire d'une part et de l'engin d'autre part afin de faciliter les opérations. Lorsque le panneau de réparation temporaire est collé, les produits utilisés sont de préférence conditionnés l'avance avec ce panneau.

Dans le cas d'une protection thermique ablative, le dispositif selon l'invention ne se différencie de celui décrit ci-avant que par des panneaux extérieurs plus épais en général non réutilisables en raison de l'érosion, réalisables avec les matériaux ablatifs habituels. Ces panneaux sont directement fixés sur la structure travaillante de l'engin. Le dispositif comporte si nécessaire la feuille d'étanchéité.

L'invention et ses avantages apparaîtront mieux à la lecture de la description qui va suivre, fournie à titre d'exemple illustratif et nullement limitatif, en référence aux dessins annexés, dans lesquels :

- la figure 1 est une vue schématique d'un engin aéronautique ou spatial pouvant recevoir le dispositif de protection thermique objet de l'invention

- les figures 2a, 2b et 2c sont des vues schématiques en coupe transversale montrant diverses possibilités d'installation du dispositif sur l'engin différenciées par la position relative de ses constituants

- la figure 3 est une vue éclatée schématique en perspective et en coupe montrant le dispositif tel que réalisé selon un premier mode consistant à produire séparément ses constituants puis à les installer successivement sur l'engin

- la figure 4 est une vue schématique en coupe le long de la ligne AA de la figure 3 qui montre des moyens de fixation d'un panneau extérieur sur la structure travaillante de l'engin par traversée mécanique de ce panneau ainsi que la possibilité d'utiliser ces moyens pour fixer les autres constituants du dispositif

- la figure 5a est une vue schématique en coupe de moyens de fixation des panneaux extérieurs sur la structure travaillante de l'engin qui peuvent équiper certains bords des panneaux et être communs à deux panneaux contigus ou à deux groupes contigus de panneaux

- la figure 5b est une vue schématique en coupe de moyens de liaison des panneaux extérieurs qui peuvent équiper certains bords des panneaux et relier deux panneaux contigus ou deux groupes contigus de panneaux

- la figure 6 est une vue schématique en perspective et en coupe montrant le dispositif tel que réalisé selon un second mode qui consiste à conditionner ensemble certains de ses constituants préalablement à leur installation sur l'engin sous forme d'éléments préfabriqués

- les figures 7a et 7b sont des vues schématiques en coupe montrant des jonctions étanches entre ces éléments préfabriqués effectuées au moyen de joints coulés sur place

- les figures 8a et 8b sont des vues schématiques en coupe montrant, de manière éclatée sur 8a, des jonctions étanches entre ces éléments préfabriqués effectuées au moyen de joints en tissu ou en feuille de métal

- la figure 9a est une vue schématique en perspective montrant comment un panneau de réparation temporaire peut protéger une partie, supposée détériorée, d'un panneau extérieur

- la figure 9b est une vue schématique en coupe le long de la ligne AA de la figure 3 qui montre des moyens de fixation mécanique d'un panneau de réparation temporaire sur l'engin.

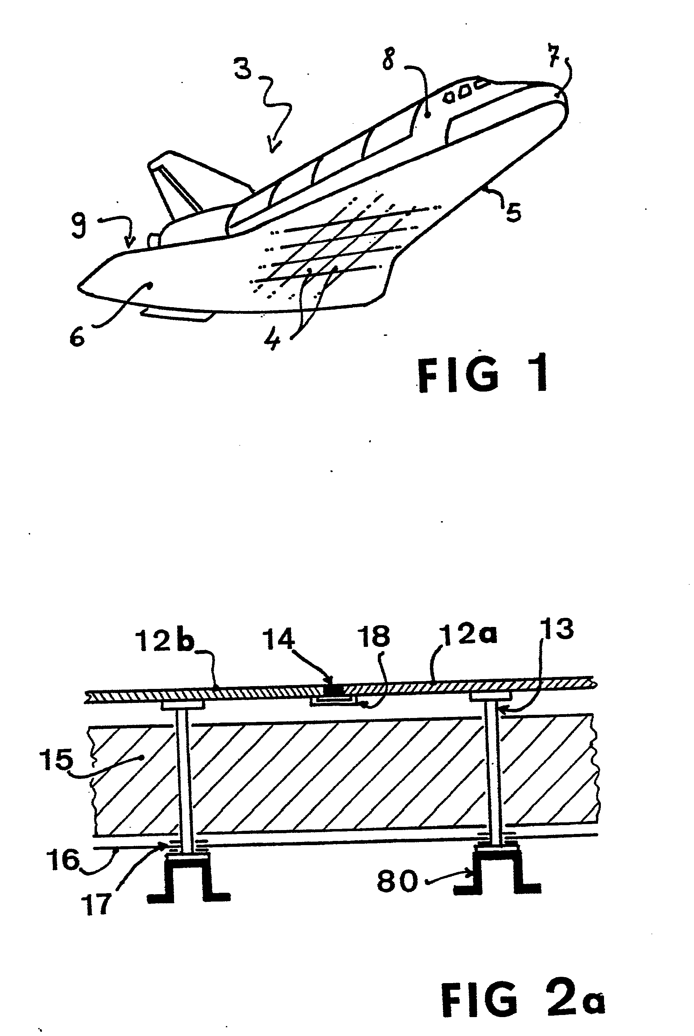

La figure 1 illustre un engin spatial ou aéronautique 3 équipé du dispositif de protection thermique 4 objet de l'invention. A cause de sa grande vitesse cet engin subit durant la traversée de l'atmosphère un échauffement très important dans la zone des bords d'attaque 5 de la voilure et dans les zones d'intrados 6 et du nez 7. Les zones latérales et supérieures 8 du corps de l'engin ainsi que d'extrados 9 de la voilure sont soumises à un échauffement moins important. Le dispositif objet de la présente invention permet de protéger la plupart de ces zones, en particulier les zones 6, 8 et 9.

La figure 2a est une vue schématique montrant la position relative des constituants du dispositif objet de l'invention. On y voit que les panneaux contigus 12a et 12b définissant le contour extérieur de l'engin sont fixés par des moyens de fixation 13 directement sur la structure travaillante 80 de l'engin 3, représentée pour simplifier par des sections de cadres ou longerons. On y voit aussi que la structure travaillante 80 qui ne fait pas partie du dispositif de protection thermique ne comporte pas l'habituelle paroi de fuselage reliant les cadres ou longerons. Cela peut être le cas par exemple lorsque la structure la plus avantageuse n'est pas une structure coque, qu'il s'agisse de l'engin complet ou de l'une de ses parties.

A la jonction des bords respectifs des panneaux 12a et 12b on voit aussi une jonction étanche 14 et des moyens de liaison 18 éventuels, l'ensemble servant à l'étanchéité et éventuellement à compenser ou à tolérer les dilatations de ces panneaux. La couche isolante 15 est située entre ces panneaux extérieurs 12 et la structure 80 de l'engin. Dans un mode de réalisation préféré, cette couche isolante est fixée sur l'engin par des moyens de fixation qui sont les moyens de fixation 13 des panneaux 12. Sur cette figure la feuille d'étanchéité 16 est située entre la couche isolante 15 et la structure 80 de l'engin mais elle peut être disposée à d'autres emplacements et de plus la couche isolante 15 peut être répartie de part et d'autre de la feuille 16. Cette feuille 16 et ses traversées étanches 17 font partie du dispositif de protection thermique lorsque les exigences d'étanchéité du dispositif imposent leur utilisation.

Sur la figure 2a, les moyens de fixation 13 des panneaux 12 sont situés en plein panneau et ne sont donc pas placés en coïncidence avec la jonction 14 disposée sur les bords de ces panneaux.

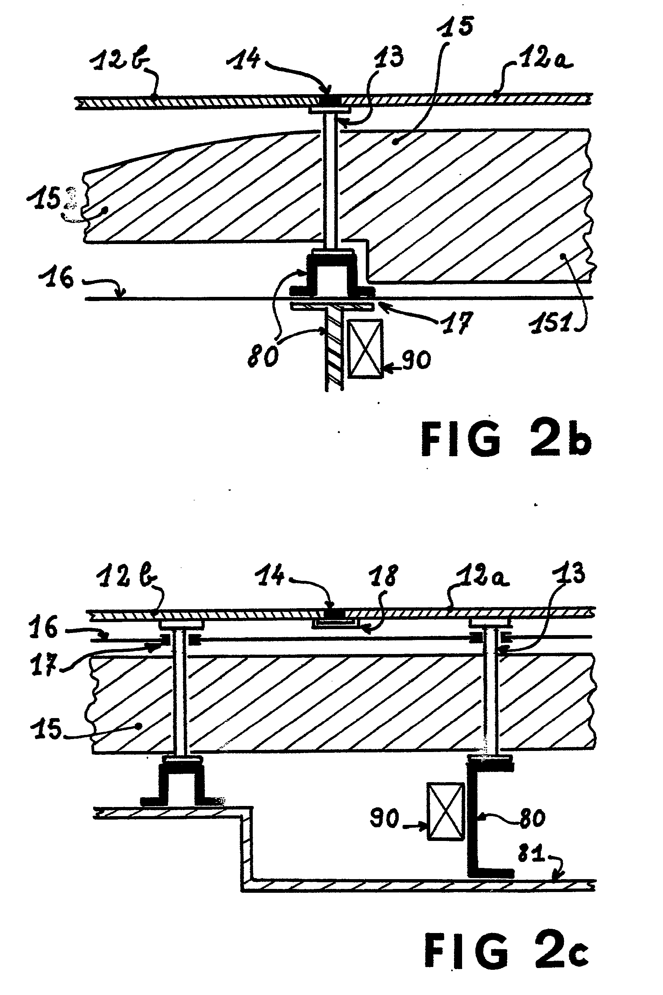

Sur la figure 2b on retrouve dans un autre arrangement les mêmes constituants que sur la figure 2a. On y voit que les moyens de fixation 13 des panneaux 12 sur la structure travaillante 80 de l'engin coïncident avec les bords de ces panneaux. On y voit aussi que la feuille d'étanchéité 16 et ses traversées étanches 17, faisant partie du dispositif, peuvent être situées dans une région intérieure de l'engin s'il est plus avantageux, par exemple, de réaliser l'étanchéité ou de la compléter à proximité des équipements vitaux de l'engin représentés schématiquement par l'équipement 90 fixé dans l'engin, par exemple sur un élément intérieur de sa structure 80.

Sur cette figure 2b on voit encore que la disposition relative des constituants donne une grande liberté pour faire varier l'épaisseur de la couche isolante 15 afin d'obtenir l'efficacité d'isolation localement la plus appropriée : la couche isolante 15 peut sans difficulté d'aménagement être plus épaisse dans sa partie 151 que dans sa partie 152 sans imposer obligatoirement une variation de la hauteur des panneaux contigus 12a et 12b par rapport à leurs points de fixation sur la structure 80. Cette hauteur peut d'ailleurs être choisie assez librement, ce qui n'impose pas de situer la face extérieure de la couche isolante 15 à proximité très immédiate de la face intérieure des panneaux 12 située en regard. On voit encore qu'une telle disposition offre l'avantage de permettre facilement des modifications d'épaisseur de la couche isolante sans conséquence sur les autres constituants, si l'utilisation du dispositif en démontre la nécessité. Cet avantage est considérable car le dispositif peut comporter à l'origine une couche isolante 15 d'épaisseur surabondante puis être facilement modifié pour acquérir l'efficacité d'isolation exactement nécessaire, ou à l'inverse être modifié après de premières utilisations pour obtenir une efficacité d'isolation supérieure sans que l'augmentation d'épaisseur de la couche isolante 15 contraigne à revoir l'ensemble du dispositif. Cette disposition permet aussi de situer au mieux certains constituants de l'engin, non représentés sur cette figure 2b, par exemple ceux destinés à réduire les niveaux acoustiques internes.

La figure 2c illustre un autre arrangement des mêmes constituants qui présente lui aussi les avantages précédemment décrits. On y voit comment une paroi travaillante 81, continue ou non, sous-jacente au dispositif de protection thermique, peut exister sans pour autant épouser fidèlement le contour de l'engin défini par la face extérieure des panneaux 12a et 12b. Cette possibilité peut être utilisée par exemple lorsque la structure travaillante la plus avantageuse comporte une paroi de forme différente de la forme extérieure de l'engin, qu'il s'agisse de l'engin complet ou de l'une de ses parties. Une telle configuration peut correspondre par exemple au cas d'un réservoir ou d'une enceinte dont la paroi participe à la résistance d'ensemble de l'engin alors que sa forme est imposée par des considérations n'ayant qu'un lien éloigné, ou aucun lien, avec celles qui déterminent la forme extérieure de l'engin. On voit aussi sur cette figure la feuille d'étanchéité 16 intercalée entre les panneaux extérieurs contigus 12 et la couche isolante 15. Dans cette position la feuille 16 subit des températures élevées et doit être réalisée à partir d'un matériau réfractaire. Cette configuration permet, sans être exclusive, d'utiliser la feuille d'étanchéité 16 comme protection thermique de secours à demeure en redondance des panneaux extérieurs 12 supposés détériorés, auxquels elle n'est pas liée. Dans cette éventualité, les caractéristiques de la feuille 16 sont adaptées au cumul de ses fonctions.

A l'examen des figures 2a, 2b et 2c on comprend que s'il n'est pas nécessaire de réaliser un dispositif de protection thermique rigoureusement étanche par lui-même, la feuille 16 peut être supprimée et aussi éventuellement la jonction étanche 14. Dans cette éventualité, la feuille 16 peut n'exister que pour servir de protection thermique de secours ou pour servir à la protection de l'engin contre le foudroiement ou encore à toute autre fin sans lien direct avec l'étanchéité.

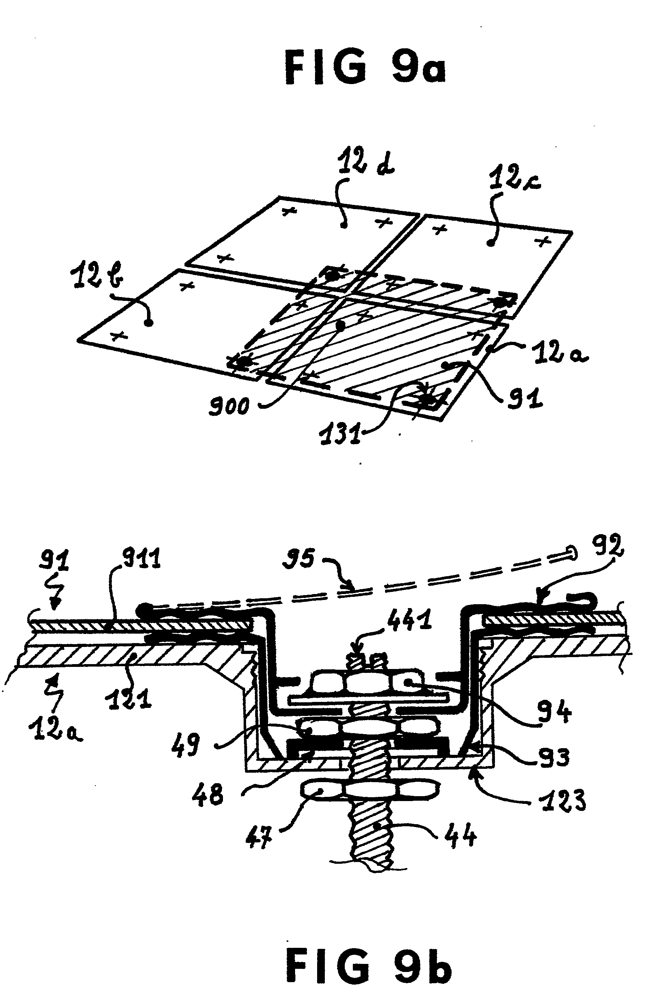

Afin de simplifier les figures 2a, 2b et 2c les panneaux de réparation temporaire et leurs moyens de fixation sur l'engin n'y sont pas représentés. Ces constituants du dispositif font l'objet d'illustrations aux figures 9a et 9b.

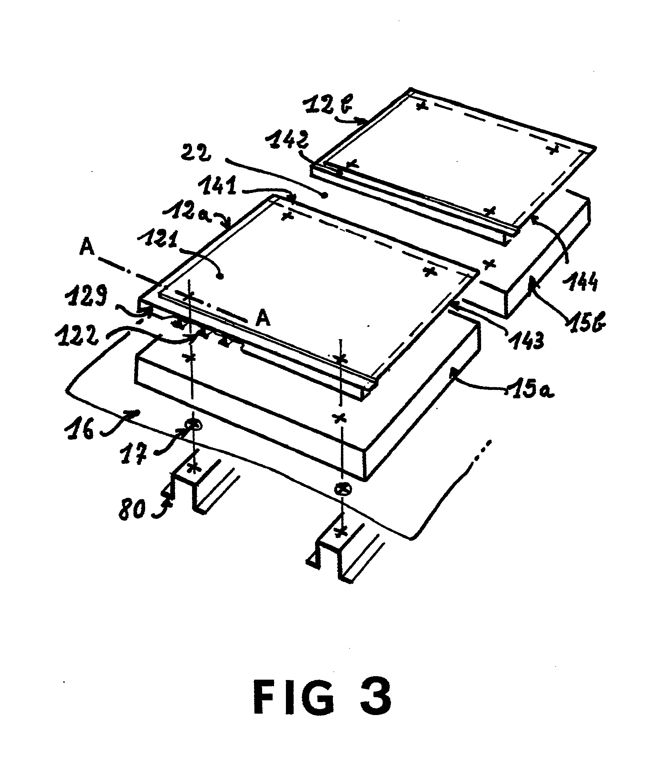

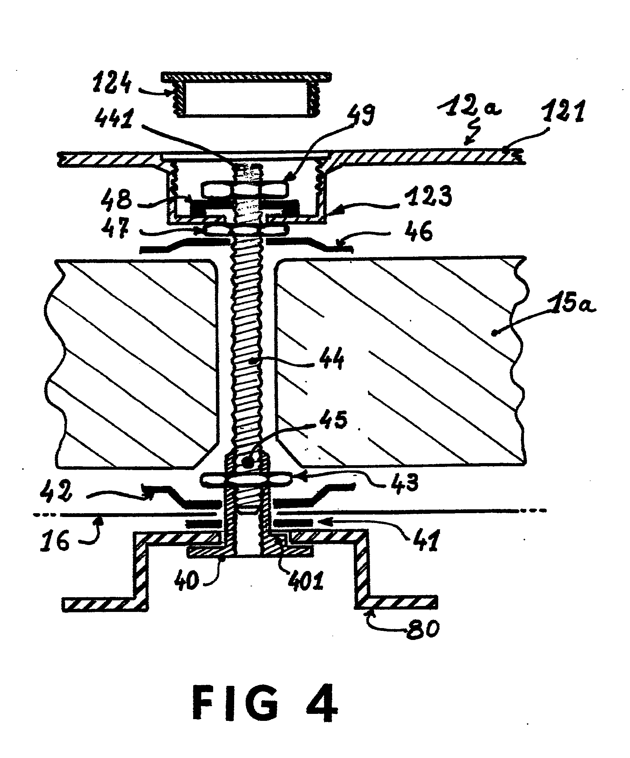

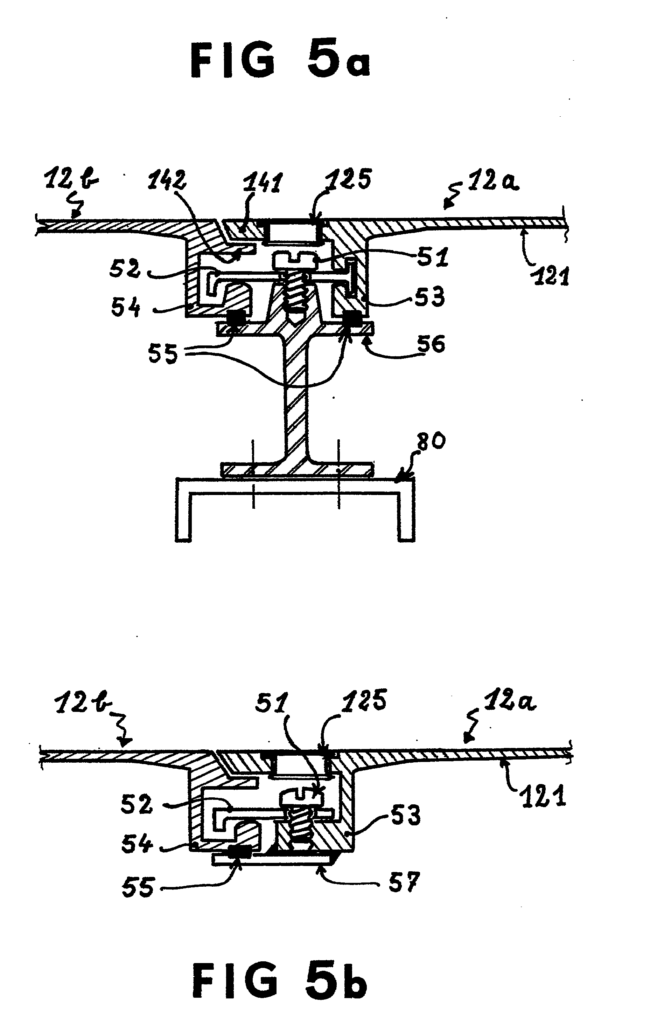

La figure 3 est une vue éclatée simplifiée du dispositif montrant mieux sa constitution. Elle illustre schématiquement un premier mode de réalisation qui consiste à réaliser séparément les constituants du dispositif puis à les installer successivement sur l'engin. On y voit les panneaux contigus extérieurs 12a et 12b. Le panneau 12a comporte une feuille mince 121 en matériau réfractaire représentée équipée de moyens de rigidification 122 visibles sur la partie en coupe de cette figure 3 ainsi que de flancs 129. La fixation de chaque panneau 12 sur la structure travaillante 80 de l'engin est représentée réalisée en 4 points par des moyens de fixation propres à chaque panneau, placés en plein panneau, mais qui auraient pu équiper également les bords de celui-ci. Ces moyens ne sont pas représentés sur la figure 3 car un exemple de moyens de fixation en plein panneau est illustré séparément à la figure 4 et un exemple de moyens de fixation sur la structure travaillante équipant les bords des panneaux fait l'objet de la figure 5a.

On voit aussi sur la figure 3 les éléments isolants 15a et 15b qui constituent par juxtaposition la couche isolante. Ces éléments sont représentés associés chacun à un panneau 12 et fixés sur la structure travaillante 80 par les moyens de fixation des panneaux 12. Ils sont composés de produits isolants à base de quartz, de silice, de céramique ou d'un autre matériau résistant aux températures élevées. Ces produits peuvent être rigides, ou souples. Si le maintien de leur intégrité et de leur organisation l'impose, ils sont placés dans un emballage léger résistant aux températures élevées, par exemple dans une feuille métallique très mince ou dans un tissu de silice.

Sur la figure 3 on voit également la feuille d'étanchéité 16, de grandes dimensions, et ses traversées étanches 17. Cette feuille est réalisée de préférence en un matériau réfractaire. Elle peut jouer le rôle de protection thermique de secours en cas de détérioration des panneaux 12, soit dans la position qu'elle occupe sur la figure 3, soit dans une autre position, par exemple placée entre les panneaux 12 d'une part et les éléments 15a et 15b d'autre part. Cette feuille peut aussi servir à protéger les parties internes de l'engin des conséquences d'un foudroiement à condition d'être réalisée en un matériau conducteur de l'électricité, par exemple de l'INCONEL, et sous réserve de relier entre elles des feuilles 16 voisines par des éléments conducteurs de façon à réaliser une cage dite de FARADAY.

Sur cette figure 3, la jonction des bords des panneaux 12a et 12b est schématisée comme un simple recouvrement par la partie mince débordante 141 appartenant au panneau 12a de la partie légèrement creuse 142 appartenant au panneau 12b. De même les parties minces débordantes 143 et 144 des panneaux 12 recouvrent les parties creuses correspondantes de panneaux contigus placés en rangée, non représentés sur la figure 3.

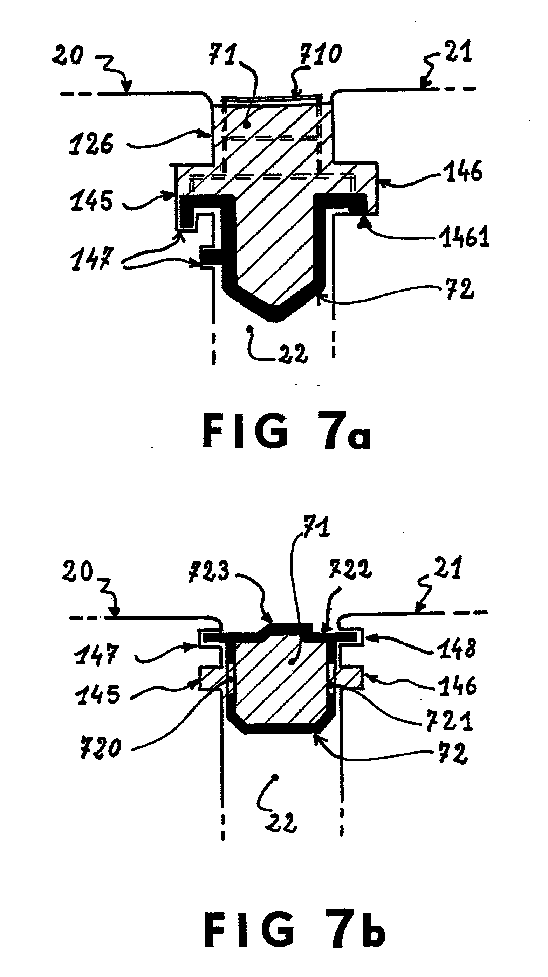

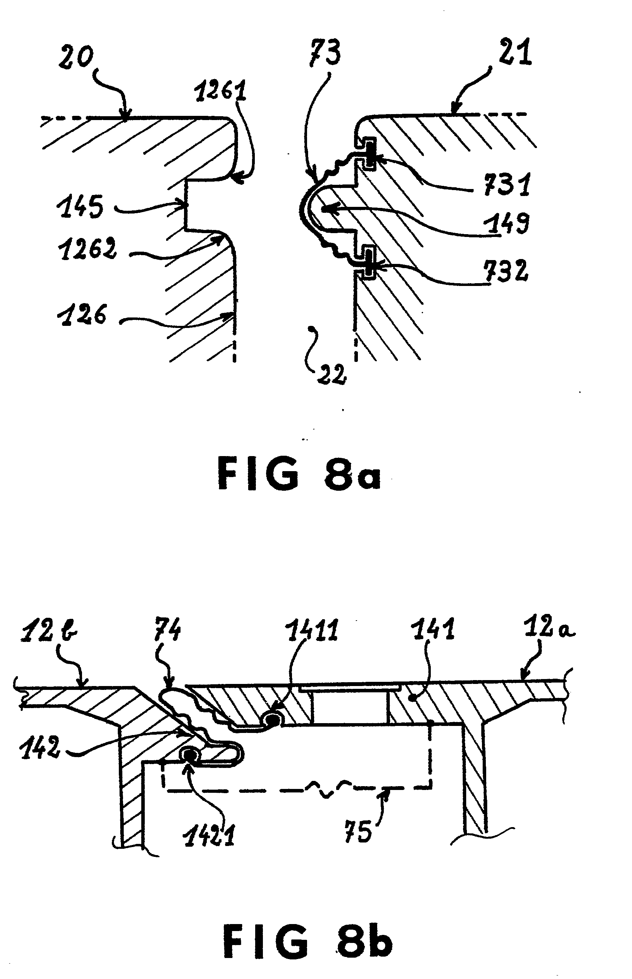

Des éxemples détaillés de liaison mécanique des bords des panneaux 12 sont illustrés séparément aux figures 5a et 5b et des exemples de joints pouvant être interposés dans l'intervalle 22 entre les flancs de bordure 129 font l'objet des figures 7a, 7b, 8a et 8b.

Bien entendu la figure 3 ne constitue qu'un schéma de principe montrant un exemple de réalisation et on ne sortirait pas du cadre de l'invention en réalisant des panneaux 12 de forme différente, ou dépourvus de moyens de rigidification 122, ou même relativement souples, ou fixés par leurs bords et non en plein panneau, ou reliés entre eux par construction de façon à constituer des groupes de panneaux, ou bien en réalisant des éléments de couche isolante dont la forme en plan ne coïnciderait pas avec celle des panneaux 12, ou encore en associant les éléments de la couche isolante et la feuille d'étanchéité, ou même en supprimant un constituant du dispositif qui ne serait pas nécessaire pour l'utilisation visée.

De même les caractéristiques du dispositif fournies ci-après à l'appui de la figure 3 sont indicatives et données à titre d'exemple nullement limitatif.

La longueur des côtés des panneaux 12 est de plusieurs dizaines de centimètres, typiquement 40 à 80cm. Chacun des panneaux 12 comprend au moins une feuille mince plane ou courbe 121 dont l'épaisseur est de l'ordre de quelques dizièmes de millimètre. Dans le cas d'une feuille métallique unique elle est d'environ 0,1 à 0,25 millimètre. Si la feuille unique est en matériau composite, son épaisseur est d'environ 0,5 à 1mm. Cette épaisseur dépend principalement des conditions de température et de pression, des charges d'environnement, des dimensions des panneaux et de leur conception détaillée, notamment de leur degré de rigidité et donc de la présence ou de l'absence de moyens de rigidification 122. Ces derniers peuvent être des raidisseurs comme représentés sur la figure 3, ou une feuille ondulée afin de constituer un panneau semi-sandwich, ou encore d'autres éléments résistants pour constituer par exemple un panneau à âme nid d'abeille ou un ensemble stratifié rigide. La hauteur de ces éléments est en général de 5 à 10 mm.

La hauteur des panneaux 12 par rapport à leurs points de fixation sur la structure travaillante 80 est en général de 4 à 7 centimètres environ. Elle dépend de l'efficacité globale requise du dispositif de protection thermique, et en particulier de l'épaisseur de la couche isolante. Dans une zone soumise à une température d'environ 1400°C elle est de l'ordre de 6 centimètres incluant 5cm environ de hauteur des éléments isolants 15a et 15b. Lorsque la température subie est d'environ 900°C, la hauteur des panneaux 12 est de l'ordre de 4 cm. Les panneaux 12 peuvent être construits de façon que leur dilatation thermique ou leur déformation mécanique soit compensée par déformation locale contrôlée des panneaux eux-mêmes et posséder dans ce but des stries ou une forme particulière, ou être conçus de façon qu'elle soit absorbée à la jonction des bords des panneaux adjacents.

La figure 4 illustre schématiquement un exemple de moyens mécaniques de fixation 13 d'un panneau 12a sur la structure travaillante 80 de l'engin qui le traversent en plein panneau. Ces moyens sont utilisables dans le mode de réalisation du dispositif illustré à figure 3. On voit sur la figure 4 qu'une partie creuse 123 de la feuille mince 121 est traversée par une tige filetée 44 solidaire de la structure travaillante 80 de l'engin par l'intermédiaire d'une pièce d'adaptation 40. La tige filetée 44 reçoit un écrou 49 dont le serrage en appui sur une rondelle d'étanchéité 48 assure à la fois la fixation du panneau 12a sur la structure travaillante 80 et l'étanchéité de cette traversée. La situation en creux de cet assemblage et l'utilisation d'un bouchon vissé 124 permettent d'abriter l'assemblage et d'obtenir un contour extérieur lisse par rapport à l'écoulement.

On voit aussi sur cette figure 4 que les autres constituants du dispositif de protection thermique sont fixés auparavant sur la structure travaillante 80 de l'engin par ces mêmes moyens en utilisant des pièces complémentaires. La feuille d'étanchéité 16 est installée après mise en place des pièces 40 et 41 qui constituent un ensemble imperdable, fixé en premier sur la structure travaillante 80 sans possibilité de rotation car la pièce 40 comporte un ergot 401 pénétrant dans un logement prévu à cet effet dans la structure travaillante 80. La feuille d'étanchéité 16 est traversée par la pièce 40 et tenue entre les pièces d'étanchéité 41 et 42 à la suite du vissage de l'écrou 43 sur la pièce 40 qui solidarise l'ensemble sur la structure travaillante 80. Les pièces d'étanchéité 41 et 42 sont fixes en rotation au moyen d'ergots par exemple, ce qui permet de visser l'écrou 43 sans détériorer la feuille 16. Après cette opération, la tige filetée 44 est vissée dans la pièce 40 puis bloquée par une goupille 45. La couche isolante 15a est ensuite enfilée sur cette tige filetée 44, ce qui garantit son maintien dans le sens latéral. Elle est maintenue verticalement par pression de la pièce 42 et et de la pièce 46, fixes en rotation, tenues elles-mêmes respectivement par les écrous 43 et 47.

La tige filetée 44 comporte une partie d'extrémité 441 de longueur excessive pour les besoins de l'assemblage afin de pouvoir recevoir les accessoires de fixation d'un panneau de réparation temporaire dans l'éventualité d'une détérioration du panneau 12a. Cette disposition ne constitue qu'un exemple illustré de façon plus détaillée à la figure 9b.

Bien entendu, les moyens de fixation d'un même panneau 12a sur la structure travaillante 80 peuvent ne pas être identiques. Pour s'accomoder par exemple de sa dilatation ils peuvent comporter des moyens complémentaires non représentés sur la figure 4 autorisant les débattements nécessaires.

Ces moyens de fixation peuvent être améliorés par l'adjonction d'éléments supplémentaires non représentés tels que des cales isolantes pour minimiser la conduction de chaleur vers la structure travaillante, ou des accessoires facilitant la fixation précise des panneaux et les réglages, ou d'autres accessoires.

La plupart des éléments constituant les moyens de fixation représentés sur la figure 4, sont réalisés en des matériaux réfractaires tels que, par exemple, des alliages de nickel, de zircone ou de titane ou de matériaux composites. Ceci vaut également pour les moyens illustrés aux figures 5a et 5b.

La figure 5a illustre un exemple de moyens de fixation 13 de deux panneaux 12a et 12b sur la structure travaillante 80 de l'engin qui peuvent équiper certains bords de ces panneaux. Il peut s'agir de moyens équipant les deux panneaux représentés 12a et 12b, ou de moyens communs à des groupes ou rangées de panneaux. Dans ce dernier cas, le panneau 12a sur la figure 5a est représentatif, par exemple, d'une rangée de panneaux vue en coupe tandis que le panneau 12b est représentatif d'une autre rangée de panneaux adjacente à la première.

On voit sur cette figure 5a la feuille mince 121, ainsi que la partie débordante 141 du panneau 12a et la partie 142 en léger creux du panneau 12b qui sont représentées avec plus de précision que sur la figure 3. On y voit aussi que la partie 53 du panneau 12a et la partie 54 du panneau 12b sont maintenues serrées entre d'une part le socle du support 56, équipé de joints d'étanchéité 55, et d'autre part la pièce 52. Cette dernière est fixée sur la partie haute du support 56 par une vis 51 bloquée après mise en place correcte des panneaux 12. Un bouchon agrafable 125 obture l'orifice prévu dans la partie 141 pour permettre le serrage de la vis 51. Le support 56 est fixé sur la structure travaillante 80 de l'engin par des vis non représentées. Il peut être équipé d'accessoires non représentés pour fixer la couche isolante et la feuille d'étanchéité. Ce support 56 peut se présenter sous différentes formes. Il peut s'agir d'un profilé ou bien d'un ensemble de supports répartis le long des bords des panneaux 12. De même, la pièce 52 peut être continue ou non. Pour faciliter la fixation des panneaux 12 et leur démontage éventuel, la pièce 52 est prisonnière de la partie 53 et la vis 51 est elle-même prisonnière de la pièce 52.

A l'examen de la figure 5a, on comprend que le support 56 pourrait aussi remplir son rôle s'il appartenait à la structure travaillante de l'engin, comme c'est le cas de l'élément 80, au lieu d'appartenir aux moyens de fixation des panneaux 12 du dispositif de protection thermique. On voit que la différenciation entre moyens de fixation des panneaux 12 d'une part, et éléments de la structure travaillante de l'engin d'autre part, est relativement arbitraire. On peut donc admettre que le support 56, et d'une manière générale les moyens de fixation des panneaux 12, peuvent éventuellement contribuer à la résistance mécanique de la structure travaillante de l'engin, ceci sans déroger au principe de base qui consiste à séparer les rôles du dispositif de protection thermique d'une part et de la structure travaillante de l'engin d'autre part.

On voit aussi sur la figure 5a que les joints 55 ne sont pas au contact direct des gaz chauds. Ce mode de fixation n'est d'ailleurs pas exclusif de l'utilisation d'autres joints d'étanchéité. Un joint supplémentaire en matériau réfractaire, par exemple en tissu de silice ou en métal peut être interposé si nécessaire entre les parties 141 et 142 pour protéger l'ensemble de l'assemblage d'une pénétration directe des gaz chauds comme illustré à la figure 8b.

On voit également sur la figure 5a que l'ensemble de l'assemblage comporte les jeux nécessaires l'absorption des dilatations des panneaux 12 et que la pièce 52 est au contact de surfaces arrondies pour faciliter le glissement relatif et aussi pour permettre l'assemblage de panneaux 12 non situés dans un même plan. On voit aussi sur la figure 5a que ces moyens de fixation permettant l'ajustement correct des bords des panneaux 12a et 12b l'un par rapport à l'autre et le maintien de cet ajustement en utilisation, même si ces panneaux ne sont pas coplanaires.

La figure 5a peut bien entendu servir à illustrer les moyens de fixation des panneaux 12 sur la structure travaillante 80 de l'engin lorsque ces panneaux résistants présentent la particularité d'être conçus suffisamment souples pour que leur configuration ou leurs bords respectifs puissent être facilement ajustés par déformation élastique ou qu'ils puissent acquérir la forme locale du contour de l'engin à l'emplacement qu'ils protègent. Les moyens illustrés à la figure 5a permettent, tels quels ou moyennant une adaptation, la fixation de tels panneaux sur la structure travaillante et éventuellement la création de leur courbure ou son maintien dans différents plans qu'il s'agisse de fixer ces panneaux deux à deux ou qu'il s'agisse de fixer des rangées adjacentes de panneaux.

La figure 5b illustre un exemple de moyens de liaison 18 des panneaux 12a et 12b utilisables éventuellement pour relier ceux de leurs bords qui ne seraient pas équipés de moyens de fixation sur la structure travaillante. On retrouve sur la figure 5b certains constituants et certaines dispositions illustrés à la figure 5a. On voit cependant sur la figure 5b que les formes de la partie 53 et de la pièce 52 sont différentes. La partie 54 du panneau 12b est maintenue serrée entre d'une part la pièce 57, équipée d'un joint d'étanchéité 55, et d'autre part la pièce 52 fixée sur la partie 53 par la vis 51. Ce mode de liaison n'est pas exclusif non plus de l'utilisation d'autres joints d'étanchéité. Il peut être employé pour relier des panneaux rigides ou des panneaux possédant une certaine souplesse mentionnés ci-avant.

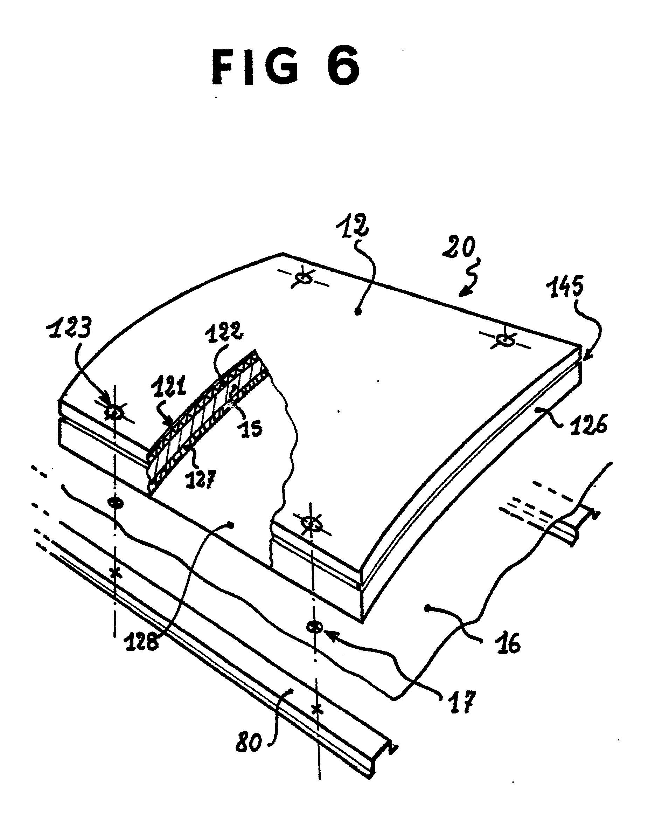

La figure 6 illustre un second mode de réalisation du dispositif de protection thermique qui consiste à conditionner ensemble certains de ses constituants préalablement à leur installation sur l'engin et à les fournir ensemble sous forme d'éléments 20 préfabriqués pour cette installation. Dans ce mode de réalisation, le dispositif comporte une pluralité d'éléments 20, dont la forme générale peut être parallélépipédique, composés chacun d'une association de la couche isolante 15 et d'un panneau extérieur 12. La figure 6 représente un élément préfabriqué 20 fixé directement sur la structure travaillante 80 par des moyens de fixation non représentés qui peuvent être ou non les moyens de fixation du panneau 12 sur la structure illustrés à la figure 4, et dans l'affirmative plus courts car la partie creuse 123 peut être profonde. On voit aussi sur cette figure 6 que la feuille 16 d'étanchéité, équipée de traversées étanches 17, est interposée entre l'élément 20 et la structure travaillante 80 de l'engin. On voit encore que la couche isolante 15 est maintenue latéralement par les flancs 126 de l'élément 20 et verticalement entre, d'une part les moyens de rigidification 122 de la feuille mince 121, et d'autre part les moyens de rigidification 127 de la feuille 128 située sur la face interne de l'élément 20.

Sur la figure 6 on voit également que les flancs 126 de l'élément 20 comportent une rainure 145 qui est une représentation schématique d'une géométrie ou de moyens destinés à faciliter la pose de moyens d'étanchéité entre éléments contigus.

Dans une variante non représentée la feuille (16) est associée aux éléments (20), soit fixée à leur feuille 128, soit située seulement entre feuilles 128 contigues étanches.

La figure 7a illustre schématiquement un exemple de jonction étanche entre, par exemple, l'élément 20 tel qu'illustré à la figure 6 et un autre élément semblable contigu 21. Un joint 71 est coulé dans l'intervalle 22 entre ces deux éléments après mise en place d'une pièce souple 72 fermant l'intervalle 22 et fixation des deux éléments sur la structure travaillante de l'engin, non représentée. Cette pièce souple 72 peut être accrochée sur l'élément 20 avant mise en place de l'élément 21 ou introduite entre ces deux éléments après leur fixation sur la structure. Telle que représentée sur la figure 7a, elle est accrochée sur l'élément 20 avant la mise en place de l'élément 21 par pénétration dans les rainures 147 obtenue en jouant sur sa souplesse ou son élasticité. Lorsque l'élément 21 est mis en place, la pièce souple 72 vient en léger apppui sur la face 1461 de la rainure 146. Sa position dans l'intervalle 22 est ainsi garantie avant réalisation sur place du joint coulé 71. Cette pièce 72 peut être réalisée de préférence en un matériau réfractaire, par exemple en un alliage de métaux tels que le zircone, le nickel ou le titane. Le joint coulé 71 peut être par exemple à base de résine souple et être renforcé par l'adjonction d'éléments, en matériaux réfractaires de préférence consistant par exemple en tissus ou trames de fibres réfractaires, noyés dans la masse de ce joint et représentés schématiquement par la pièce 710. Telle que représentée, cette pièce déborde à l'extérieur du joint 71 et le protège de l'érosion qui serait provoquée par l'écoulement extérieur. Elle est relevée pendant la réalisation du joint. Le joint 71 occupe la rainure 145 située dans le flanc 126 de l'élément 20 ainsi que la rainure 146 de l'élément 21 de façon à y être ancré. Le renfort éventuel 710 peut être solidaire de la pièce 72 pour faciliter le maintien de sa position dans l'intervalle 22 ou être directement solidaire, par exemple, du flanc 126 de l'élément 20.

A l'examen de la figure 7a, on comprend que l'utilisation d'une pièce souple 72 et d'un joint 71 souple coulé sur place s'accomode à la fois de la dilatation des éléments 20 et 21 qui a tendance à réduire la largeur de l'intervalle 22 et des tolérances de position relative de ces éléments qui peuvent se traduire par un parallélisme imparfait de leurs flancs ou par une inégalité de hauteur des éléments. Ces dispositions présentent aussi l'avantage de faciliter le contrôle de la réalisation du joint 71 dont la bonne qualité doit être garantie. On comprend aussi qu'il est avantageux de réaliser le joint 71 et la pièce 72 en éléments de grande longueur pour minimiser le nombre de leurs discontinuités et que les intersections des joints doivent être aussi étanches. Dans ce but, la pièce souple 72 représentée en section sur la figure 7a peut croiser un autre exemplaire de cette pièce 72 situé à une hauteur différente qui serait par exemple disposé dans le plan de la figure, c'est-à-dire perpendiculairement à la pièce 72 représentée en section. Dans le même but, la forme de la pièce 72 peut être telle que deux exemplaires de cette pièce se croisent avec contact afin que le joint 71 puisse être ensuite coulé sans déborder dans la partie basse de l'intervalle 22.

La figure 7a peut aussi servir à illustrer un exemple de jonction entre deux panneaux contigus 12a et 12b dans le premier mode de réalisation du dispositif, illustré à la figure 3. Le joint 71 est alors coulé dans l'intervalle entre les éléments de bordure de ces panneaux ayant le repère 129 sur la figure 3. Cette remarque vaut également pour les exemples de jonction illustrés aux figures 7b, 8a et 8b.

La figure 7b illustre un autre exemple d'utilisation d'un joint 71 de même sorte et coulé dans les mêmes conditions que précédemment dans l'intervalle 22 entre éléments 20 et 21. La pièce souple 72 possède une autre forme. Sa position dans l'intervalle 22 est garantie par pénétration dans les rainures 147 et 148. Elle possède des trous 720 et 721 pour que le joint 71 puisse pénétrer dans les rainures 145 et 146. Les parties 722 et 723 de la pièce 72 peuvent recouvrir le joint 71 en totalité ou en partie afin de le protéger de l'érosion. Le joint 71 et la pièce souple 72 peuvent être de grande longueur.

La figure 8a est un schéma qui montre de manière éclatée une autre sorte de jonction entre éléments 20 et 21. Elle illustre un exemple de joint souple 73 disposé dans l'intervalle 22 entre ces éléments qui peut être réalisé en un métal ou tissu réfractaire, par exemple en tissu à base de fibres de silice ou d'oxydes éventuellement imprégné. Le joint 73, représenté en section, est fixé en deux points 731 et 732 sur le flanc de l'élément 21 mentionné précédemment. Il est conçu de manière à pouvoir s'allonger tout en restant tendu. Il contourne la partie proéminente 149 de l'élément 21 dont il épouse la forme et se trouve en appui sur elle. Lorsque les éléments 20 et 21 sont mis en place, la partie 149 pénètre dans la rainure 145 prévue dans le flanc 126 de l'élément 20. Le joint 73 vient alors au contact des parties courbées 1261 et 1262 du flanc 126 et reste tendu ce qui procure une double étanchéité. La dilatation des éléments 20 et 21 en utilisation provoque leur rapprochement et la pénétration plus profonde de la partie 149 dans la rainure 145. Le joint 73 reste alors au contact des parties 1261 et 1262 ce qui maintient l'étanchéité. Dans un mode de réalisation préféré, l'étanchéité est améliorée par ce rapprochement. Le joint 73 peut être de grande longueur. L'intersection de deux exemplaires de ce joint peut être réalisée en les faisant cheminer à des hauteurs différentes et en les reliant si nécessaire.

La figure 8b illustre un autre exemple d'utilisation d'un joint souple réalisable en un matériau réfractaire. Ce joint 74 est représenté interposé entre les parties 141 et 142 appartenant respectivement aux panneaux 12a et 12b telles qu'elles sont illustrées aux figures 3 et 5a. Ce joint 74 est fixé sur l'une au moins de ces parties sur lesquelles il est appuyé. Il est représenté fixé sur la partie 141 par pénétration dans la rainure 1411 et sur la partie 142 par pénétration dans la rainure 1421. Sa souplesse s'accommode des tolérances de position relative des panneaux 12a et 12b et du rapprochement des parties 141 et 142 dû à la dilatation de ces panneaux. Dans un mode de réalisation préféré l'étanchéité que procure le joint 74 est améliorée par ce rapprochement. Le joint 74 peut faire partie des panneaux par construction. S'il est fixé sur les deux panneaux. ceux-ci sont alors produits à la suite les uns des autres et forment un groupe de panneaux d'un seul tenant qui est monté sur l'engin. Il peut aussi être de grande longueur et produit indépendamment des panneaux. La résistance mécanique du joint 74 peut être importante. Dans ce cas, il peut être utilisé par exemple comme élément mécanique de liaison entre les deux panneaux.

La figure 8b illustre également la possibilité de fixer un joint souple 75 ailleurs sur les panneaux 12a et 12b, représenté en pointillés. Dans ce cas également, le joint 75 peut être de grande longueur, ou peut faire partie des panneaux par construction, ou peut jouer le rôle d'élément mécanique de liaison entre les panneaux, ou encore peut posséder ces caractéristiques combinées.

Bien entendu, les figures 7a, 7b, 8a et 8b illustrent des exemples de réalisation de joints qui procurent une étanchéité partielle ou totale et on ne sortirait pas du cadre de l'invention en adoptant des dispositions différentes de celles illustrées, par exemple en réalisant le joint 71 représenté à la figure 7a sans l'aide d'une pièce souple 72 maintenue à demeure, ou en situant ce joint plus bas sur le flanc 126 de l'élément 20, ou en utilisant une combinaison de diverses sortes de joints, ou en faisant jouer à ces joints qui relient des panneaux 12 ou éléments 20 étanches le rôle de la feuille d'étanchéité, ou même, en n'utilisant aucun joint.

La figure 9a illustre un exemple d'utilisation d'un panneau de réparation temporaire 91, représenté hachuré, pour protéger la partie 900, supposée détériorée, du panneau 12a. La partie 900 est située en bordure du panneau 12a près du panneau 12b contigu. Par conséquent la jonction entre ces panneaux peut également être détériorée. Le contour du panneau de réparation temporaire 91 est représenté en traits discontinus. Ce panneau recouvre la partie 900 et la zone qui l'entoure de manière à protéger aussi les jonctions.Il est représenté fixé sur l'engin par des moyens de fixation mécanique 131.

Au vu de la réparation à effectuer le panneau de réparation temporaire 91 peut, le cas échéant, être découpé aux dimensions les plus appropriées et ses fixations peuvent être situées au meilleur emplacement.

La figure 9b illustre un exemple de moyens de fixation mécanique 131 d'un panneau de réparation temporaire 91 sur le panneau 12a, supposé détérioré, réalisés en ajoutant simplement des accessoires aux moyens existants avant réparation pour fixer le panneau 12a sur l'engin tels qu'ils sont illustrés à la figure 4. On retrouve en effet sur cette figure 9b la tige filetée 44, sa partie d'extrémité 441, et l'écrou 49 en appui sur la rondelle d'étanchéité 48 qui fixe sur la tige filetée 44 la partie creuse 123 de la feuille mince 121 appartenant au panneau 12a. Cet assemblage existant reçoit au moment de la réparation les moyens de fixation appartenant au panneau de réparation temporaire 91, illustrés comme étant un ensemble solidaire de la feuille mince 911 de ce panneau constitué des pièces 92, 93 et 94. Les pièces 92 et 93 sont emmanchées et maintiennent de part et d'autre la feuille mince 911. L'écrou 94 est prisonnier de la pièce 92. Cet ensemble est introduit dans la partie creuse 123. Son centrage est favorisé par la forme de la pièce 93. La solidarisation de cet ensemble sur la tige filetée 44 est obtenue en serrant l'écrou prisonnier 94. Cette opération provoque un serrage plus important de la feuille 911 par les pièces 92 et 93. La pièce souple 95 qui sert à protéger l'assemblage est représentée en traits discontinus en position d'ouverture pour intervention sur l'assemblage. On comprend que la seule intervention nécessaire sur l'assemblage existant avant réparation consiste à dévisser le bouchon 124 représenté sur la figure 4.

Bien entendu il ne s'agit là que d'un exemple de réalisation portant, pour simplifier la description, sur l'utilisation de moyens de fixation 13 des panneaux 12 illustrés à la figure 4 et déjà décrits eux-mêmes, et on ne sortirait pas du cadre de l'invention en fixant le panneau de réparation temporaire d'une manière différente sur le panneau 12a détérioré que ce soit directement sur ce panneau 12a lui-même par collage par exemple, ou que ce soit sur ses moyens de fixation 13 sur l'engin, ou sur ses moyens de liaison 18 avec des panneaux 12 contigus.

Le dispositif de protection thermique réutilisable objet de l'invention est réalisable industriellement par des méthodes classiques. Les moyens et procédés de réalisation et de contrôle du dispositif lui-même et de la structure travaillante de l'engin se trouvent simplifiés par la séparation de leurs rôles respectifs qui, de plus, évite une trop grande imbrication de compétences techniques différentes. Ceci est un facteur important d'économie, comme l'est aussi la standardisation des constituants du dispositif et des méthodes d'installation sur l'engin.

Ce dispositif est utilisable de préférence pour la protection des zones d'intrados et d'extrados de la voilure de l'engin ainsi que des zones latérales et supérieures du corps de l'engin. Son emploi généralisé dans ces zones de grande superficie, ou limité à certains emplacements, procure des avantages considérables correspondant aux buts et objectifs de l'invention précédemment exposés. parmi lesquels il faut mentionner :
- l'allègement du dispositif de protection thermique lui-même, optimisé sans contraintes dues à la présence d'une paroi proche, et dont la masse surfacique est d'environ 7 Kg/m2 dans une zone où la température atteint 1100°C
- l'allègement de la structure de l'engin, qui peut être très important grâce à une meilleure optimisation rendue possible par la liberté de comporter ou non l'habituelle paroi extérieure dont la masse, variable selon les engins, aurait été de l'ordre de 4 à 7 Kg/m2 ou davantage, à ajouter directement à celle du dispositif de protection thermique
- la capacité d'adaptation du dispositif aux performances et caractéristiques requises qu'il s'agisse de modifier son efficacité d'isolation en faisant varier l'épaisseur de la couche isolante dans de grandes proportions selon l'emplacement protégé ou selon l'utilisation, ou qu'il s'agisse de le doter de constituants redondants, ou qu'il s'agisse de sa capacité à subsister sans modifications à d'éventuelles évolutions de forme de l'engin
- l'aptitude du dispositif être réparé au moyen de panneaux de réparation pouvant à être utilisés au sol ou au cours d'un vol orbital sans requérir de compétences particulières ni une grande dextérité, sans polluer l'engin, sans nécessiter un grand nombre de panneaux de réparation et sans risque de perdre des pièces, produits, moyens et accessoires
- la capacité du dispositif à jouer des rôles complémentaires tels que la protection de l'engin contre les effets d'un environnement agressif, par exemple ceux d'un éventuel foudroiement, ou ceux du bruit élevé des moteurs en accueillant si nécessaire des produits destinés à réduire les niveaux acoustiques subis par les parties internes de l'engin.

On comprend que, si la description ci-dessus du dispositif objet de l'invention concerne l'application particulière à un engin aéronautique ou spatial, ce dispositif peut aussi être utilisé pour protéger une installation ou un objet soumis à des échauffements importants. Il peut être réalisé, selon les revendications, avec des variations ou modifications par rapport à la description ci-dessus.

## Revendications

1. Dispositif de protection thermique réutilisable qui peut équiper des engins et installations soumis à des échauffements importants et à des charges dues à l'environnement tels que des engins aéronautiques ou spatiaux, ce dispositif comprenant
- une pluralité de panneaux (12) contigus qui forment une surface continue et lisse délimitant le contour de l'engin (3), qui font écran par rapport au milieu extérieur et qui subissent localement les efforts et les charges résultant de l'environnement
- des moyens de fixation (13) de ces panneaux (12) contigus
- une couche isolante (15) située entre les panneaux (12) contigus et l'engin (3) afin de préserver celui-ci d'un échauffement excessif ainsi que des moyens de fixation de cette couche isolante (15) sur l'engin (3) caractérisé
par le fait qu'il comporte en outre :
- des moyens de liaison (18) entre les panneaux (12) contigus,
- des moyens d'étanchéité de l'engin (3) par rapport au milieu extérieur qui sont des jonctions étanches (14) entre panneaux (12) contigus et des pièces d'étanchéité équipant les moyens de fixation (13) des panneaux (12) ainsi que les moyens de liaison (18) entre panneaux (12) contigus, ces moyens d'étanchéité s'opposant aux échanges de gaz et de liquides à travers la surface extérieure de l'engin (3),
- une feuille (16) étanche, mince, équipée de traversées étanches (17) située entre les panneaux (12) et l'engin (3) ou entre les panneaux (12) contigus, utilisée lorsqu'il est nécessaire de parfaire l'étanchéité que procurent les jonctions étanches (14) et les pièces d'étanchéité (48,55) ou lorsqu'il faut constituer une rendondance des jonctions étanches (14) ou lorsqu'il est avantageux d'emprisonner une couche d'air entre cette feuille (16) et les panneaux (12), ladite feuille (16) ne contribuant pas au transfert d'efforts mécaniques entre éléments de la structure travaillante (80) de l'engin (3) ni entre les panneaux (12) et cette structure travaillante (80),
par le fait que ce dispositif est fixé directement sur la structure travaillante (80) de l'engin (3) sans nécessiter l'existence, à proximité dudit dispositif, d'une paroi intermédiaire de structure, telle que la paroi de fuselage de l'engin (3) pour servir de support à ce dispositif ou pour servir de barrière étanche entre l'engin (3) et le milieu extérieur,
par le fait que les panneaux (12) contigus sont étanches, plans ou courbes, et possèdent une bonne résistance mécanique,
par le fait que ceux des constituants de ce dispositif qui sont soumis à des températures élevées, y compris les joints, sont réalisés avec des matériaux réfractaires qui possèdent de bonnes caractéristiques mécaniques, même à ces températures et se prêtent à la fabrication de pièces légères et résistantes,
par le fait que ce dispositif est facilement réparable au moyen de panneaux de réparation temporaire (91)

2. Dispositif de protection thermique réutilisable selon la revendication 1, caractérisé en ce que la couche isolante (15) et les panneaux (12) contigus sont produits séparément puis installés à tour de rôle directement sur la structure travaillante (80) de l'engin (3)

3. Dispositif de protection thermique réutilisable selon la revendication 1, caractérisé en ce que la couche isolante (15) est emprisonnée dans des éléments (20) préfabriqués, installés côte à côte directement sur la structure travaillante (80) de l'engin (3), éléments (20) dont la paroi externe est constituée d'un panneau (12)

4. Dispositif de protection thermique réutilisable selon l'une quelconque des revendications 1 à 3, caractérisé en ce que les panneaux (12), comme les éléments (20), sont fixés sur la structure travaillante (80) de l'engin (3) par des moyens de fixation (13) comportant des éléments mécaniques ou par collage, soudage, brasage ou autre procédé.

5. Dispositif de protection thermique réutilisable selon l'une quelconque des revendications 1 à 4, caractérisé en ce que les moyens de fixation (13) d'un panneau (12) sur la structure travaillante (80) de l'engin (3) servent également à fixer d'autres constituants du dispositif sur ladite structure travaillante.

6. Dispositif de protection thermique réutilisable selon l'une quelconque des revendications 1 à 5, caractérisé en ce qu'un panneau (12) comprend au moins une feuille mince (121) étanche, plane ou courbe, en matériau réfractaire qui possède une bonne résistance mécanique.

7. Dispositif de protection thermique réutilisable selon l'une quelconque des revendications 1 à 6, caractérisé en ce qu'un panneau (12a) ou un élément (20) est équipé de moyens individuels de fixation (13) sur la structure travaillante (80) de l'engin (3), ces moyens comprenant :

- un assemblage mécanique du panneau (12a) et d'un tige filetée (44), cet assemblage étant accessible, réglable, contrôlable, étanche et protégé du milieu extérieur sans que sa présence perturbe la régularité de la forme extérieure du panneau (12a)
- des éléments mécaniques de fixation (40, 43 et 45) de cette tige filetée (44) sur la structure travaillante (80) ainsi que leurs accessoires de réglage, d'isolation et de débattement sous l'effet de la dilatation du panneau (12a)
- des pièces accessoires (42 et 46) qui maintiennent la couche isolante (15a) en position autour de la tige filetée (44)
- des pièces accessoires (41 et 42) qui réalisent une traversée étanche (17) de la feuille d'étanchéité (16)

8. Dispositif de protection thermique réutilisable selon l'une quelconque des revendications 1 à 6, caractérisé en ce que les moyens de fixation (13) des panneaux (12) ou des éléments (20) sur la structure travaillante (80) de l'engin (3), communs à plusieurs panneaux (12) contigus ou groupes contigus de panneaux (12), comprennent :

- un assemblage avec jeux de la partie (53) en bordure du panneau (12a) et de la partie (54) en bordure du panneau contigu (12b) qui sont maintenues en appui sur les joints d'étanchéité (55) portés par un support (56) commun, constituant ainsi une liaison accessible, contrôlable, étanche, lisse vis-à-vis du milieu extérieur et protégée de ce milieu, qui permet à la fois le maintien de l'ajustement correct des bords respectifs des panneaux (12), et le libre rapprochement de ces bords sous l'effet de la dilatation des panneaux (12)
- un support (56) constitué d'un profilé ou d'un ensemble de pieds capable de recevoir indifféremment des panneaux (12) coplanaires ou non coplanaires et capable d'assurer, moyennant l'adjonction de pièces accessoires, la fixation de la couche isolante (15) et de la feuille d'étanchéité (16)
- des moyens de fixation du support (56) sur la structure travaillante (80) de l'engin (3) ainsi que leurs accessoires de réglage et d'isolation.

9. Dispositif de protection thermique réutilisable selon l'une quelconque des revendications 1 à 8, caractérisé en ce que les moyens de liaison (18) entre panneaux (12) ou entre éléments (20) coplanaires ou non coplanaires comprennent un assemblage avec jeux de la partie (53) en bordure du panneau (12a) et de la partie (54) en bordure du panneau contigu (12b) maintenue en appui sur un joint d'étanchéité (55) porté par la pièce (57) du panneau (12a) constituant ainsi une liaison accessible, contrôlable, étanche, lisse vis-à-vis du milieu extérieur et protégée de ce milieu, qui perment à la fois le maintien de l'adjustement correct des bords respectifs des panneaux (12) même en cas de défaillance d'un moyen de fixation (13) et le libre rapprochement de ces bords sous l'effet de la dilatation des panneaux (12)

10. Dispositif de protection thermique réutilisable selon l'une quelconque des revendications 1 à 9, caractérisé en ce que les jonctions étanches (14) comprennent des joints souples coulés (71) à base de résines et/ou des pièces souples en matériaux réfractaires constituant des joints (72, 73, 74, 75) implantés de manière contrôlable entre les panneaux (12) contigus et les éléments (20) contigus, solidaires de ces panneaux (12) et éléments (20), qui résistent aux températures élevées, aux effets de la dilatation thermique des panneaux (12) et aux effets mécaniques de l'érosion par le milieu extérieur, si nécessaire au moyen de renforts (710)

11. Dispositif de protection thermique réutilisable selon la revendication 10, caractérisé en ce que les joints souples coulés (71) et les pièces souples constituant des joints (72, 73, 74, 75) comportent des intersections étanches, sont réalisés en éléments de grande longueur et sont utilisables en combinaison de différents types de joints.

12. Dispositif de protection thermique réutilisable selon l'une quelconque des revendications 10 à 11, caractérisé en ce que la pièce souple 73, réalisée en un matériau réfractaire en feuille, constitue un joint constamment tendu en appui sur une partie proéminente (149) de l'élément (21) d'une part et sur des parties (1261 et 1262) bordant une rainure (145) du flanc (126) de l'élément (20) d'autre part, de manière que le contact permanent de ce joint (73) avec les parties (1261 et 1262) procure une double étanchéité permanente malgré les variations, dues aux dilatations, de la largeur de l'intervalle (22) entre les éléments (20 et 21) contigus, comme entre panneaux (12) contigus

13. Dispositif de protection thermique réutilisable selon l'une quelconque des revendications 1 à 12, caractérisé en ce que les jonctions étanches (14) entre panneaux (12) contigus, comme entre éléments (20) contigus, possédant une résistance mécanique importante, servent également à relier mécaniquement ces panneaux (12) en se substituant ou non aux moyens de liaison (18) entre ces panneaux (12).

14. Dispositif de protection thermique réutilisable selon l'une quelconque des revendications 1 à 13, caractérisé en ce que la feuille (16) étanche, réalisée en un matériau conducteur de la chaleur et/ou réfractaire, constitue une barrière thermique diminuant les températures maximales subies par les parties internes de l'engin (3).

15. Dispositif de protection thermique réutilisable selon l'une quelconque des revendications 1 à 14, caractérisé en ce que la feuille (16) est associée dès sa production ou lors de l'installation sur l'engin (3) à la couche isolante (15) ou à l'élément (20) qui contient cette couche isolante (15), ou disposée entre éléments (20).

16. Dispositif de protection thermique réutilisable selon l'une quelconque des revendications 1 à 15, caractérisé en ce qu'il comprend une feuille (16) réalisée en un matériau conducteur de l'électricité et reliée par des éléments conducteurs aux feuilles (16) voisines de façon à constituer une cage de FARADAY qui préserve les parties internes de l'engin (3) des conséquences d'un foudroiement ou d'un bombardement d'électrons, cette fonction de la feuille (16) se cumulant ou non avec sa fonction d'étanchéité.

17. Dispositif de protection thermique réutilisable selon l'une quelconque des revendications 1 à 16, caractérisé en ce que les panneaux (12) sont réparables au moyen de panneaux de réparation temporaire (91) fixés sur les panneaux (12) détériorés, cette fixation étant réalisée par collage, ou autre procédé analogue, ou par des moyens mécaniques (131).

18. Dispositif de protection thermique réutilisable selon la revendication 17, caractérisé en ce qu'un panneau de réparation temporaire (91) comporte au moins une feuille mince (911) résistante réalisée en matériau réfractaire.

19. Dispositif de protection thermique réutilisable selon l'une quelconque des revendications 17 à 18, caractérisé en ce qu'un panneau de réparation temporaire (91) est découpable à la forme voulue et aux dimensions voulues pour effectuer la réparation considérée.

20. Dispositif de protection thermique réutilisable selon l'une quelconque des revendications 17 à 19, caractérisé en ce que les pièces, produits, moyens et accessoires nécessaires aux opérations de réparation sont solidaires ou prisonniers du panneau de réparation temporaire (91) d'une part et de l'engin (3) d'autre part afin d'en éviter la perte et plus généralement afin de faciliter les opérations de réparation.

21. Dispositif de protection thermique réutilisable selon l'une quelconque des revendications 1 à 20, caractérisé en ce que les panneaux (12) contigus, réalisés en un matériau ablatif qui s'érode en cours d'utilisation, ne sont pas systématiquement réutilisables.

22. Dispositif de protection thermique réutilisable selon l'une quelconque des revendications 1 à 21, caractérisé en ce que les moyens de fixation (13) des panneaux (12) sur la structure travaillante (80) de l'engin (3), la couche isolante (15), les moyens de liaison (18) entre panneaux (12) contigus, la feuille (16) ou les éléments (20) préfabriqués servent également à supporter, fixer ou contenir des produits destinés à réduire les effets d'un environnement agressif tels que les produits utilisés pour abaisser les niveaux acoustiques subis par les parties internes de l'engin (3) ou encore ceux utilisés pour absorber des ondes radar incidentes sur l'engin.

**Claims**

1. A reusable thermal protection device that can be fitted onto aircraft and facilities subject to high levels of heating and loads due to the environment such as aeronautic or space aircraft, comprising:
   – a plurality of adjacent panels (12) making up a continuous, smooth surface defining the contour of the aircraft (3), serving as a shield against the outside environment and locally subject to stress and environmental loads
   – attachment means (13) for said adjacent panels (12)
   – an insulating layer (15) located between said adjacent panels (12) and the aircraft (3) so as to preserve the latter against excessive heating as well as attachment means for said insulating layer (15) onto the aircraft (3)
   characterized in that, in addition, it consists of:
   – connection means (18) linking said adjacent panels (12),
   – watertightness means for the aircraft (3) relative to the outside environment, made up of watertight junctions (14) between adjacent panels (12) and watertight parts fitted to the attachment means (13) of said panels (12), as well as connection means (18) between adjacent panels (12), the latter watertightness means preventing the exchange of gas and fluids through the outer surface of the aircraft (3),
   – a thin, watertight sheet (16) equipped with watertight bulkheads (17), located between the panels (12) and the aircraft (3) or between the adjacent panels (12), used when the watertightness provided by the watertight junctions (14) and the watertight parts (48, 55) has to be improved or when redundant watertight connections (14) are needed or when it is advantageous to trap a layer of air between said sheet (16) and the panels (12), said sheet (16) leading to no transfer of mechanical stress between the components of the stress-bearing structure (80) of the aircraft (3) or between the panels (12) and said stress-bearing structure (80), in that the device is directly attached to the stress-bearing structure (80) of the aircraft (3) obviating the need for an intermediate structure wall close to said device, such as the fuselage wall of the aircraft (3) to be used as support for this device or as a watertight barrier between the aircraft (3) and the outside environment,
   in that the adjacent panels (12) are watertight, flat or curved and feature good resilience properties,
   in that those elements of said device that are subject to high temperatures, including the seals, are made of refractory materials featuring good resilience properties even at these temperatures and lend themselves to the manufacture of light and resilient parts, in that this device is easily repairable using makeshift panels (91).

2. A reusable thermal protection device according to claim 1, characterized in that the insulating layer (15) and the adjacent panels (12) are produced separately and in turn directly installed on the stress-bearing structure (80) of the aircraft (3).

3. A reusable thermal protection device according to claim 1, characterized in that the insulating layer (15) is trapped between prefabricated elements (20), mounted side by side directly onto the stress-bearing structure (80) of the aircraft (3), with the outer wall of said elements (20) being made up of a panel (12).

4. A reusable thermal protection device according to any one of claims 1 to 3, characterized in that the panels (12), like the elements (20), are attached to the stress-bearing structure (80) of the aircraft (3) by attachment means (13) comprising mechanical elements or by bonding, welding, brazing or the like.

5. A reusable thermal protection device according to any one of claims 1 to 4, characterized in that said attachment means (13) of a panel (12) to the stress-bearing structure (80) of the aircraft (3) are also used to secure other components of said device to said stress-bearing structure.

6. A reusable thermal protection device according to any one of claims 1 to 5, characterized in that one panel (12) consists of at least one thin, flat or curvilinear watertight sheet (121) made of refractory material featuring good resilience properties.

7. A reusable thermal protection device according to any one of claims 1 to 6, characterized in that one panel (12a) or one element (20) is fitted with specific attachment means (13) to the stress-bearing structure (80) of the aircraft (3), said means comprising:

– one mechanical assembly consisting of a panel (12a) and a threaded shank (44), said assembly being accessible, adjustable, controllable, watertight and protected from the outside environment and not disturbing the smooth outer shape of the panel (12a)
– mechanical attachment means (40, 43 and 45) intended to secure said threaded shank (44) to the stress-bearing structure (80) together with their adjustment, insulation and clearance accessories providing for the expansion of the panel (12a)
– accessory parts (42 and 46) that hold the insulating layer (15a) around the threaded shank (44),
– accessory parts (41 and 42) that make up a watertight bulkhead (17) of the watertight sheet (16).

8. A reusable thermal protection device according to any one of claims 1 to 6, characterized in that the attachment means (13) of the panels (12) or of the elements (20) to the stress-bearing structure (80) of the aircraft (3), are common to several adjacent panels (12) or groups of adjacent panels (12), comprising:

– an assembly having clearances between the part (53) located at the edge of the panel (12a) and the part (54) at the edge of the adjacent panel (12b) held against the watertight seals (55) mounted on a support (56), making up an accessible, controllable, watertight, smooth junction relative to the outside environment and protected against the latter, allowing for the maintenance of the correct adjustment of the respective panel edges (12), and the free closing-in of said edges upon expansion of the panels (12)
– a support (56) constituted by a section or a set of lugs capable of accommodating any co-planar or non co-planar panels (12) and able to provide for the attachment, through the addition of accessory parts, of the insulating layer (15) and the watertight sheet (16)
– attachment means for the support (56) to the stress-bearing structure (80) of the aircraft (3) together with adjustment and insulation accessories.

9. A reusable thermal protection device according to any one of claims 1 to 8, characterized in that the connecting means (18) between panels (12) or between co-planar or non-co-planar elements (20) comprise an assembly provided with clearance between the part (53) located at the edge of panel (12a) and the part (54) at the edge of the adjacent panel (12b) held against a watertight seal (55) carried by part (57) of the panel (12a) making up thus an accessible, controllable, watertight and smooth junction relative to the outside environment and protected against the latter, allowing for the maintenance of the correct adjustment of the respective panel edges ( 12) even in case of failure of a means of attachment (13), and the free closing-in of said edges during expansion of the panels (12).

10. A reusable thermal protection device according to claims 1 to 9, characterized in that the watertight junctions (14) comprise cast flexible watertight resin-based seals (71) and/or flexible parts made of refractory materials making up seals (72, 73, 74, 75) located so as to be controllable between the adjacent panels (12) and the adjacent elements (20) integral with said panels (12) and said elements (20) withstanding high temperatures, the effects of thermal expansion of panels (12) and the mechanical effects of environmental erosion, through use if required of reinforcing elements (710).

11. A reusable thermal protection device according to claim 1, characterized in that (71) and the flexible parts making up seals (72, 73, 74, 75) comprise watertight connections and consist of long elements which can be used jointly with different types of seals.

12. A reusable thermal protection device according to any one of the claims 10 to 11, characterized in that the flexible part 73, made of sheet refractory material, make up a constantly stretched seal mounted, on the one hand, on a projecting part (149) of element (21) and, on the other, on parts (1261 and 1262) on the edge of a groove (145) of side (126) of element (20), so that the permanent contact of this seal (73) with the parts (1261 and 1262) provides a permanent double watertightness in spite of the expansion-induced variations in the width of the interval (22) between the adjacent elements (20 and 21), as between adjacent panels (12).

13. A reusable thermal protection device according to any one of claims 1 to 12, characterized in that the watertight junctions (14) between adjacent panels (12), as between adjacent elements (20) featuring high resilience properties, equally serve to connect mechanically said panels (12) by substituting for or not substituting for the connecting means (18) between these panels (12).

14. A reusable thermal protection device according to any one of claims 1 to 13, characterized in that the watertight sheet (16) made of heat conducting and/or refractory material, makes up a thermal barrier reducing the the maximum temperatures sustained by the inner parts of the aircraft (20).

15. A reusable thermal protection device according to any one of claims 1 to 14, characterized in that the sheet (16) associated, as early as it is produced or upon installation on aircraft (3), with the insulating layer (15) or with the element (20) that contains this insulating layer (15), or arranged between elements (20).

16. A reusable thermal protection device according to any one of claims 1 to 15, characterized in that it consists of a sheet (16) made of electricity conducting material and connected by means of conducting elements to the neighbouring sheets (16) so as to make up a FARADAY's cage protecting the inner parts of the aircraft (3) from the consequences of lightning or bombardment of electrons, whether or not the function of said sheet (16) cumulates with its watertightness function.

17. A reusable thermal protection device according to any one of claims 1 to 16, characterized in that the panels (12) can be repaired with makeshift panels (91) attached to the damaged panels (12), said attachment involving bonding or the like, or mechanical means ( 131).

18. A reusable thermal protection device according to claim 17, characterized in that a makeshift panel (91) comprises at least one resilient thin sheet (911) made of refractory material.

19. A reusable thermal protection device according to any one claims 17 to 18, characterized in that one makeshift panel (91) can be cut to the desired shape and size so as to allow the considered repair work to be carried out.

20. A reusable thermal protection device according to any one claims 17 to 19, characterized in that the parts, products, means and accessories required for the repair operations are integral with or trapped, on the one hand, in the makeshift panel (91) and, on the other, in the aircraft (3) so as to avoid any loss thereof and more generally to facilitate repair work.

21. A reusable thermal protection device according to any one claims 1 to 20, characterized in that the adjacent panels (12), made of ablative material subject to continuous wear are not systematically reusable.

22. A reusable thermal protection device according to any one of claims 1 to 21, characterized in that the attachment means (13) of panels (12) to the stress-bearing structure (80) of the aircraft (3), the insulating layer (15), the connecting means (18) between the adjacent panels (12), the sheet (16) or the prefabricated elements (20) are also used to support, attach or contain the products to alleviate aggressive environmental effects, such as the products used to reduce the acoustic levels sustained by the inner parts of the aircraft (3) or even those utilized to absorb the aircraft incident radar waves.

## Patentansprüche

1. Wiederverwendbare thermische Schutzvorrichtung mit der Luftfahrzeuge und Anlagen ausgerüstet sein können, die starken Aufheizungen und Umgebungsbelastungen ausgesetzt sind, wie z.B. Flug- oder Raumfahrtkörper, wobei diese Vorrichtung folgendes umfasst
— eine Vielzahl stumpf aneinanderstossender Schindeln (12), die eine kontinuierliche glatte Fläche bilden, die Kontur des Luftfahrzeuges (3) begrenzen, einen Schutzschirm zur äusseren Umwelt darstellen und lokalen, aus der Umgebung resultierenden Beanspruchungen und Belastungen ausgesetzt sind
— Befestigungsmittel (13) dieser aneinanderstossender Schindeln (12)
— eine Isoliermatte (15) die sich zwischen den aneinanderstossenden Schindeln (12) und dem Luftfahrzeug (3) befindet, um dieses vor einem übermässigen Aufheizen zu schützen, sowie Befestigungsmittel dieser Isoliermatte (15) am Luftfahrzeug (3) und dadurch gekennzeichnet, dass sie darüberhinaus mit folgendem ausgerüstet ist:
— Verbindungsmittel (18) zwischen den aneinanderstossenden Schindeln
— Dichtungsmittel des Luftfahrzeuges (3) in bezug auf die äussere Umwelt, bestehend aus druckdichten Verbindungen (14) zwischen den aneinanderstossenden Schindeln (12) und den Dichtungsteilen, mit denen die Befestigungsmittel (13) der Schindeln (12) ausgerüstet sind sowie die Verbindungsmittel (18) zwischen den aneinander stossenden Schindeln (12), wobei diese Dichtungsmittel dem Gas- und Flüssigkeitsaustausch durch die Aussenfläche des Luftfahrzeuges (3) entgegenwirken,
— eine dünne Dichtungsfolie (16) ausgerüstet mit dichten Durchgängen (17), die zwischen den Schindeln (12) und dem Luftfahrzeug (3) oder den aneinanderstossenden Schindeln liegt, die benutzt wird, wenn es erforderlich ist, die Dichtigkeit der druckdichten Verbindungen (14) und der Dichtungsteile (48, 55) zu vervollständigen oder wenn eine Redondanz der druckdichten Verbindungen (14) herzustellen ist oder wenn es vorteilhaft ist, eine Luftschicht zwischen dieser Folie (16) und den Schindeln (12) einzuschliessen, wobei die besagte Folie (16) weder einen Einfluss auf die mechanische Kräfteübertragung zuischen den mittragenden Strukturteilen (80) des Luftfahrzeuges (3) noch zwischen den Schindeln (12) und dieser mittragenden Struktur (80) hat dadurch, dass diese Vorrichtung direkt an der mittragenden Struktur (80) des Luftfahrzeuges (3) befestigt ist, ohne dass eine Zwischenstruktur unmittelbar neben dieser Vorrichtung notwendig ist, wie z.B. die Rumpfwand des Luftfahrzeuges (3), um dieser Vorrichtung als Halterung oder dichte Schranke zwischen Luftfahrzeug (3) und der äusseren Umwelt zu dienen, dadurch, dass die aneinanderstossenden Schindeln (12) dicht, flach oder gewölbt sind und über einen guten mechanischen Widerstand verfügen, dadurch, dass diejenigen Bestandteile dieser Vorrichtung sowie die Dichtungen, die hohen Temperaturen ausgesetzt sind aus hitzebeständigen Werkstoffen hergestellt sind, die selbst bei diesen Temperaturen, gute mechanische Eigenschaften besitzen und sich zur Herstellung von 5 widerstandsfähigen und leichten Teilen eignen, dadurch, dass diese Vorrichtung mittels vorläufiger Reparaturschindel (91) leicht in Stand zu setzen ist.

2. Wiederverwendbare thermische Schutzvorrichtung nach Anspruch 1, dadurch gekennzeichnet, dass die Isoliermatte (15) und die aneinanderstossenden Schindeln (12) getrennt hergestellt und nacheinander direkt an der mittragenden Struktur (80) des Luftfahrzeuges (3) angebracht werden.

3. Wiederverwendbare thermische Schutzvorrichtung nach Anspruch 1, dadurch gekennzeichnet, dass die Isoliermatte (15) in Fertigteilen (20) eingeschlossen ist, die Stoss auf Stoss direkt an der mittragenden Struktur (80) des Luftfahrzeuges (3) angebracht werden, Fertigteile (20) deren Aussenwand aus einer Schindel (12) besteht.

4. Wiederverwendbare thermische Schutzvorrichtung nach einem der Ansprüche 1 bis 3, dadurch gekennzeichnet, dass die Schindeln (12) sowie die Fertigteile (20) an der mittragenden Struktur (80) des Luftfahrzeuges (3) mit Befestigungsmitteln (13), die mechanische Teile umfassen, angebracht werden, oder mittels Leimung, Schweissung, Hartlötung oder anderen Verfahren.

5. Wiederverwendbare thermische Schutzvorrichtung nach einem der Ansprüche 1 bis 4, dadurch gekennzeichnet, dass die Befestigungsmittel (13) einer Schindel (12) an der mittragenden Struktur (80) des Luftfahrzeuges (3) ebenfalls zur Befestigung anderer Bestandteile der Vorrichtung an der genannten mittragenden Struktur dienen.

6. Wiederverwendbare thermische Schutzvorrichtung nach einem der Ansprüche 1 bis 5, dadurch gekennzeichnet, dass eine Schindel (12) wenigstens mit einer dünnen, flachen oder gewölbten Dichtungsfolie (121) aus hitzebeständigem Werkstoff, der einen guten mechanischen Widerstand hat, ausgerüstet ist.

7. Wiederverwendbare thermische Schutzvorrichtung nach einem der Ansprüche 1 bis 6, dadurch gekennzeichnet, dass eine Schindel (12a) oder ein Fertigteil (20) mit eigenen Befestigungsmitteln an der mittragenden Struktur des Luftfahrzeuges (3) ausgerüstet ist, wobei diese Befestigungsmittel folgendes beinhalten:
   – eine mechanische Montageeinheit des Schindels (12a) und eines Gewindeschaftes (44), die zugänglich, einstellbar, überprüfbar, dicht und von der Umwelt geschützt ist, ohne dass dabei die Gleichmässigkeit der äusseren Form des Schindels (12a) beinflusst wird
   – mechanische Befestigungsteile (40, 43 und 45) dieses Gewindeschafts (44) an der mittragenden Struktur (80) sowie die dazugehörigen Zubehörteile bez. Einstellung, Isolierung und Ausschlag unter dem Ausdehnungseffekt des Schindels (12a)
   – Zubehörteile (42 und 46), die die Isoliermatte (15a) um den Gewindeschaft (44) herum halten
   – Zubehörteile (41 und 42), die einen dichten Durchgang (17) der Dichtungsfolie (16) herstellen.

8. Wiederverwendbare thermische Schutzvorrichtung nach einem der Ansprüche 1 bis 6, dadurch gekennzeichnet, dass die Befestigungsmittel (13) der Schindeln (12) oder der Fertigteile (20) an der mittragenden Struktur (80) des Luftfahrzeuges (3) für mehrere aneinanderstossende Schindeln (12) oder zusammengehörige Gruppen von Schindeln (12) gemeinschaftlich sind und folgendes umfassen:
   – eine Montageeinheit mit einem Spiel im Bereich (53) am Schindelrand (12a) und im Bereich (54) am anstossenden Schindelrand (12b) die beide auf den Dichtringen (55) gestützt sind, von einer gemeinsamen Halterung getragen werden und so eine zugängliche, überprüfbare, dichte, nach aussen glatte und geschützte Verbindung bilden, die gleichzeitig einen einwandfreien Sitz der entsprechenden Schindelränder (12) und das freie Zusammenrücken dieser Ränder unter dem Ausdehnungseffekt der Schindel (12), gewährleistet
   – eine Halterung (56) bestehend aus einem Profil oder Stehbolzen die ebenso gleich- als ungleichausgerichtete Schindeln aufnehmen kann und mittels Hinzufügen von Zubehörteilen, das Befestigen der Isoliermatte (15) und der Dichtungsfolie (16) gewährleistet
   – Befestigungsmittel der Halterung (56) an der mittragenden Struktur (80) des Luftfahrzeuges (3) sowie ihre Zubehörteile für die Einstellung und Isolierung.

9. Wiederverwendbare thermische Schutzvorrichtung nach einem der Ansprüche 1 bis 8, dadurch gekennzeichnet, dass die Verbindungsmittel (18) zwischen den Schindeln (12) oder gleich- und ungleichausgerichteten Fertigteilen (20) eine Montageeinheit beinhalten mit einem Spiel im Bereich (53) des Schindelrandes (12a) und im Bereich (54) des anstossenden Schindelrandes (12b), der auf dem Dichtring (55) gestützt, vom Teil (57) des Schindels (12A) getragen wird und somit eine zugängliche, überprüfbare, dichte, nach aussen glatte und von aussen geschützte Verbindung darstellt, die sowohl den einwandfreien Sitz der entsprechenden Ränder der Schindeln (12) selbst im Falle eines Versagens einer der Befestigungsmittel (13) als auch das freie Zusammenrücken dieser Ränder unter dem Ausdehnungseffekt der Schindeln (12) gewährleistet.

10. Wiederverwendbare thermische Schutzvorrichtung nach einem der Ansprüche 1 bis 9, dadurch gekennzeichnet, dass die druckdichten Verbindungen (14) flexible aus Harz gegossene Dichtringe und/oder flexible Teile aus hitzebeständigem Werkstoff beinhalten, aus denen die Dichtringe (72, 73, 74, 75) hergestellt sind, die überprüfbar zwischen den aneinanderstossenden Schindeln (12) und Fertigteilen (20) angeordnet sind und mit diesen verbunden, die hohen Temperaturen, thermischen Ausdehnungseffekten der Schindeln (12) und mechanischen Erosionseffekten durch die äussere Umwelt widerstehen, wenn notwendig, mittels Verstärkungen (710).

11. Wiederverwendbare thermische Schutzvorrichtung nach Anspruch 10, dadurch gekennzeichnet, dass die flexiblen gegossenen Dichtungen (71) und die flexiblen Teile, die die Dichtungen (72, 73, 74, 75) bilden, dichte Schnittstellen aufweisen und vorzugsweise aus Teilen grosser Länge hergestellt werden und in Verbindung mit verschiedenen Dichtungstypen benutzbar sind.

12. Wiederverwendbare thermische Schutzvorrichtung nach einem der Ansprüche 10 bis 11, dadurch gekennzeichnet, dass das flexible Teil (73) aus hitzebeständiger Werkstoffolie, eine Dichtung darstellt, die einerseits ständig auf ein hervorstehendes Teil (149) des Elements (21) auflagert und andererseits auf die Teile (1261 und 1262) entlang einer Nute (145) der Flanke (126) des Fertigteils (20), so dass der ständige Kontakt dieser Dichtung (73) mit den Teilen (1261 und 1262) eine permanente doppelte Dichtung bewirkt trotz der durch die Ausdehnungen bedingten Schwankungen der Abstandsbreite (22) zwischen den aneinanderstossenden Teilen (20 und 21) sowie den aneinanderstossenden Schindeln (12).

13. Wiederverwendbare thermische Schutzvorrichtung nach einem der Ansprüche 1 bis 12, dadurch gekennzeichnet, dass die druckdichten Verbindungen (14) zwischen den aneinanderstossenden Schindeln (12) und den aneinanderstossenden Fertigteilen (20), die eine hohe mechanische Festigkeit besitzen, ebenfalls dazu dienen, die Schindeln (12) mechanisch zu verbinden, indem sie anstelle der Verbindungsmittel (18) zwischen den Schindeln (12) treten können.

14. Wiederverwendbare thermische Schutzvorrichtung nach einem der Ansprüche 1 bis 13, dadurch gekennzeichnet, dass die Dichtungsfolie (16), die aus wärmeleitfähigem und/oder hitzebeständigem Werkstoff gefertigt ist, eine thermische Schranke bildet, die die maximalen Temperaturen, denen die internen Teile des Luftfahrzeuges ausgesetzt sind, herabsetzt.

15. Wiederverwendbare thermische Schutzvorrichtung nach einem der Ansprüche 1 bis 14, dadurch gekennzeichnet, dass die Dichtungsfolie (16) ab ihrer Fertigung oder bei der Installation am Luftfahrzeug (3) mit der Isoliermatte (15) oder am Fertigteil (20) in Verbindung gebracht wird, das mit dieser Isoliermatte (15) versehen ist oder zwischen den Fertigteilen (20) angebracht wird.

16. Wiederverwendbare thermische Schutzvorrichtung nach einem der Ansprüche 1 bis 15, dadurch gekennzeichnet, dass sie eine Dichtungsfolie (16) beinhaltet, die aus einem leitenden Werkstoff gefertigt ist und mittels Leitelementen mit den benachbarten Folien (16) verbunden wird, so dass ein Faradaykäfig gebildet wird der die internen Teile des Luftfahrzeuges (3) vor den Auswirkungen einer elektrischen Entladung oder Auftreffen von Elektronen schützt, diese Funktion der Folie (16) kann je nach dem zu ihrer Dichtungsfunktion hinzukommen.

17. Wiederverwendbare thermische Schutzvorrichtung nach einem der Ansprüche 1 bis 16, dadurch gekennzeichnet, dass die Schindeln (12) mittels vorläufiger Reparaturschindeln (91) instantzbar sind, die auf die beschädigten Schindeln (12) mit Klebe oder ähnlichen Verfahren oder mit mechanischen Mitteln (131) befestigt werden.

18. Wiederverwendbare thermische Schutzvorrichtung nach Anspruch 17, dadurch gekennzeichnet, dass ein vorläufiges Reparaturschindel (91) mindestens mit einer dünnen widerstandsfähigen Folie (911) aus hitzebeständigem Werkstoff ausgerüstet ist.

19. Wiederverwendbare thermische Schutzvorrichtung nach einem der Ansprüche 17 bis 18, dadurch gekennzeichnet, dass eine vorläufige Reparaturschindel (91) je nach gewünschter Form und Grösse zuschneidbar ist, um die in Betracht gezogene Reparatur durchzuführen.

20. Wiederverwendbare thermische Schutzvorrichtung nach einem der Ansprüche 17 bis 19, dadurch gekennzeichnet, dass die zur Instandsetzung notwendigen Teile, Produkte, Mittel und Zubehörteile an der vorläufigen Reparaturschindel (91) und am Luftfahrzeug (3) eingeschlossen oder verbunden sind, um ein Verlorengehen zu vermeiden und um allgemein die Instandsetzungsvorgänge zu erleichtern.

21. Wiederverwendbare thermische Schutzvorrichtung nach einem der Ansprüche 1 bis 20, dadurch gekennzeichnet, dass die aneinanderstossenden Schindeln (12), hergestellt aus einem ablativen Werkstoff, der im Laufe der Benutzung korrodiert, nicht systematisch wiedervendbar sind.

22. Wiederverwendbare thermische Schutzvorrichtung nach einem der Ansprüche 1 bis 21, dadurch gekennzeichnet, dass die Befestigungsmittel (13) der Schindeln (12) an der mittragenden Struktur (80) des Luftfahrzeuges (3), die Isoliermatte (15), die Verbindungsmittel (18) zwischen den aneinanderstossenden Schindeln (12) die Folie (16) oder die Fertigteile (20) ebenfalls zum Halten, Befestigen oder Aufnehmen von Mitteln dienen, die dazu bestimmt sind, die Effekte einer aggressiven Umwelt herabzusetzen, wie z.B. die Mittel, die zur Verminderung des Lärmpegels benutzt werden, dem die inneren Teile des Luftfahrzeuges (3) ausgesetzt sind oder die, die das Flugzeug vor Radarstörwellen schützen.

**FIG 1**

**FIG 2a**

FIG 2b

FIG 2c

**FIG 3**

# FIG 4

# FIG 5a

# FIG 5b

# FIG 6

**FIG 7a**

**FIG 7b**

20    1261    73    21

145    731

1262    149

126    732

22

# FIG 8a

12 b    74    1411    141    12 a

142

1421    75

# FIG 8b

# FIG 9a

# FIG 9b